# EUROPEAN PATENT SPECIFICATION

(11) **EP 3 883 186 B1**
(45) Date of publication and mention of the grant of the patent: **25.10.2023**
(21) Application number: 19904381.1
(22) Date of filing: 24.12.2019
(51) Int. Cl.: H04L 43/026, H04L 43/0852, H04L 43/0876, H04L 41/34, H04L 41/04, H04L 43/10

(54) **OPERATION ADMINISTRATION AND MAINTENANCE (IOAM) PACKET TRANSMISSION METHOD, AND CORRESPONDING APPARATUS**
ÜBERTRAGUNGSVERFAHREN FÜR PAKET ZUR BETRIEBSVERWALTUNG UND -WARTUNG (IOAM) UND ZUGEHÖRIGE VORRICHTUNG
PROCÉDÉ DE TRANSMISSION DE PAQUETS D'ADMINISTRATION ET DE MAINTENANCE D'OPÉRATIONS (IOAM), ET APPAREIL CORRESPONDANT

(30) Priority: 29.12.2018 CN 201811634575
(43) Date of publication of application: 22.09.2021
(73) Proprietor: Huawei Technologies Co., Ltd., Shenzhen Guangdong 518129 (CN)
(72) Inventor: ZHOU, Tianran, Shenzhen, Guangdong 518129 (CN); XU, Ling, Shenzhen, Guangdong 518129 (CN); LIU, Min, Shenzhen, Guangdong 518129 (CN); LU, Bo, Shenzhen, Guangdong 518129 (CN)
(74) Representative: Maiwald GmbH
(86) International application number: PCT/CN2019/127791
(87) International publication number: WO 2020/135391

(56) References cited:
- US-A1- 2016 014 029
- US-A1- 2018 278 548
- FAIRHURST UNIVERSITY OF ABERDEEN C PERKINS UNIVERSITY OF GLASGOW G: "The Impact of Transport Header Confidentiality on Network Operation and Evolution of the Internet; draft-ietf-tsvwg-transport-encrypt-03.txt" , THE IMPACT OF TRANSPORT HEADER CONFIDENTIALITY ON NETWORK OPERATION AND EVOLUTION OF THE INTERNET; DRAFT-IETF-TSVWG-TRANSPORT-ENCRYPT-03.TXT; INTERNET-DRAFT: TSVWG, INTERNET ENGINEERING TASK FORCE, IE , no. 3 25 November 2018 (2018-11-25), pages 1-41, XP015130017, Retrieved from the Internet: URL:https://tools.ietf.org/html/draft-ietf -tsvwg-transport-encrypt-03 [retrieved on 2018-11-25]

## Description

### TECHNICAL FIELD

This application relates to the field of communications technologies, and in particular, to an operation, administration, and maintenance iOAM packet transmission method and related apparatus.

### BACKGROUND

An operation, administration, and maintenance (operation, administration, and maintenance, OAM) technology is a network management technology that provides fault monitoring, fault complaint, fault localization, and fault rectification for a network. An in-situ OAM (in-situ OAM, iOAM) technology has a significant advantage over an out-of-band CAM technology, and therefore has a relatively wide application prospect.

US2018/278548A1 describes that end-to-end, in situ packet enrichment for network analytics includes receiving, at a network device is a part of an end-to-end path in a network, a template that specifies unique information elements to be added to a header of a packet traversing the network device when different combinations of network features are applied to the packet at the network device. It is described that when the network device applies one or more of the network features to the packet, the network device inserts one a particular information element of the unique information elements into the header of the packet based on the template and the one or more network features applied to the packet, and that the particular information element inserted into the header is resolvable to a list of the one or more network features applied to the packet at the network device.

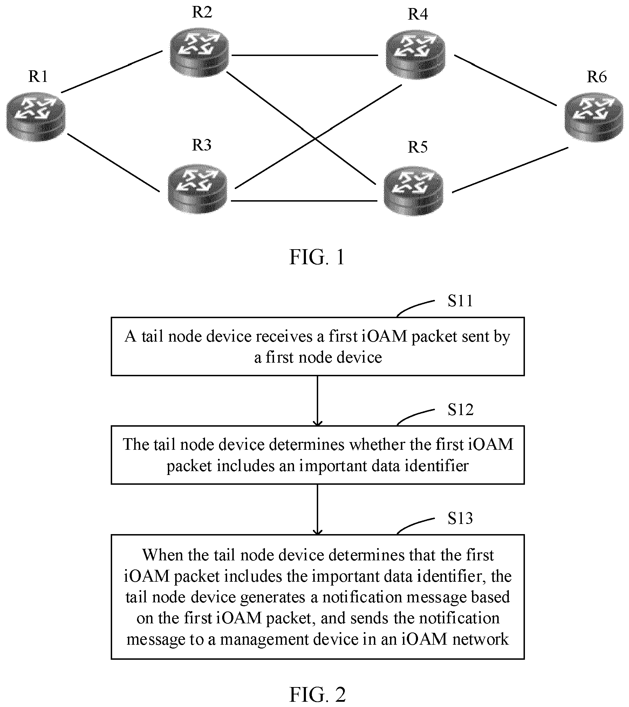

An iOAM network usually includes a plurality of node devices, and the plurality of node devices may be usually classified into types such as a head node device, an intermediate node device, and a tail node device. After obtaining a service packet, the head node device encapsulates an iOAM packet header in the service packet to obtain an iOAM packet, and encapsulates a data collection instruction in the iOAM packet. After encapsulating the data collection instruction, the head node device further adds node information of the head node device to the iOAM packet, and then transmits the iOAM packet to the intermediate node device. After obtaining the iOAM packet, each intermediate node device adds node information of the intermediate node device to the iOAM packet when detecting the data collection instruction in the iOAM packet, and transmits, to a next-hop node device, the iOAM packet to which the node information is added. After receiving an iOAM packet transmitted by a previous-hop intermediate node device, the tail node device decapsulates the iOAM packet to obtain node information, included in the iOAM packet, of each node device, and then transmits the node information to a management device, so that the management device can analyze the node information. In other words, the tail node device sends the node information of each node device along a path to the management device. The node information usually includes information such as a node identifier of the intermediate node device. Referring to a schematic diagram shown in FIG. 1, R1 is a head node device in an iOAM network, R6 is a tail node device, and the remaining nodes (namely, R2, R3, R4, and R5) are intermediate node devices.

However, in a research process of this application, an inventor finds that the iOAM technology has a feature of encapsulating a data flow packet by packet. As a result, the head node device obtains a large quantity of iOAM packets. Further, the tail node device reports a relatively large amount of data to the management device, and even performance of the tail node device and the management device may be affected.

### SUMMARY

To resolve a prior-art problem of a relatively large amount of data reported by a tail node device, embodiments of this application disclose an in-situ operation, administration, and maintenance iOAM packet transmission method and apparatus.

The independent claims define the invention and its scope of protection. Claim 1 defines an in-situ operation, administration, and maintenance, iOAM, packet transmission method. Claim 7 defines an in-situ operation, administration, and maintenance, iOAM, packet transmission method. Claim 11 deines an in-situ operation, administration, and maintenance, iOAM, packet transmission apparatus. Claim 12 defines an in-situ operation, administration, and maintenance, iOAM, packet transmission apparatus. The following aspects and designs of the disclosure describe examples of possible combinations of technical subject matters.

According to a first aspect, an embodiment of this application discloses an in-situ operation, administration, and maintenance iOAM packet transmission method. The method is applied to an iOAM network. The iOAM network includes a measurement domain. The measurement domain includes a tail node device. The tail node device is an egress device in the measurement domain. The method includes:
The tail node device receives a first iOAM packet sent by a first node device. The first iOAM packet includes first node information and service data. The first node information indicates information about the first node device that transmits the first iOAM packet. The measurement domain includes the first node device.

The tail node device determines whether the first iOAM packet includes an important data identifier. The important data identifier indicates a node device in the measurement domain to trigger, in a process of transmitting the first iOAM packet, an important event that meets a predetermined condition.

When the tail node device determines that the first iOAM packet includes the important data identifier, the tail node device generates a notification message based on the first iOAM packet, and the tail node device sends the notification message to a management device in the iOAM network. The notification message includes the first node information.

According to the implementation, the tail node device sends the notification message to the management device only when the node device in the measurement domain triggers, in the process of transmitting the first iOAM packet, the important event that meets the predetermined condition. The tail node device sends the notification message to the management device only when the node device in the measurement domain triggers, in the process of transmitting the first iOAM packet, the important event that meets the predetermined condition.

In an optional design, the method further includes:
When the tail node device determines that the first iOAM packet does not include the important data identifier, the tail node device skips generating the notification message.

If the first iOAM packet does not include the important data identifier, it indicates that the node device in the measurement domain does not trigger, in the process of transmitting the first iOAM packet, the important event that meets the predetermined condition, and the management device does not need to perform analysis. Therefore, the tail node device skips generating the notification message. Correspondingly, there is also no need to report the notification message to the management device. Therefore, an amount of data reported by the tail node device to the management device is reduced.

In an optional design, the notification message further includes tail node information. The tail node information indicates information about the tail node device that transmits the first iOAM packet.

In an optional design, before that the tail node device determines whether the first iOAM packet includes an important data identifier, the method further includes:
The tail node device detects whether the tail node device triggers, in a process of transmitting the first iOAM packet, an important event that meets a predetermined condition.

When the tail node device determines that the tail node device triggers, in the process of transmitting the first iOAM packet, the important event that meets the predetermined condition, the tail node device updates an important data identifier in the first iOAM packet.

According to the implementation, the tail node device can update the important data identifier in the first iOAM packet based on whether the tail node device triggers the important event that meets the predetermined condition.

In an optional design, that the tail node device receives a first iOAM packet sent by a first node device includes:
The tail node device receives the first iOAM packet sent by the first node device and forwarded by a second node device. The first iOAM packet further includes second node information.

The second node information indicates the second node device that transmits the first iOAM packet.

The second node information is node information encapsulated by the second node device in the first iOAM packet.

The notification message further includes the second node information.

According to the implementation, the first iOAM packet obtained by the tail node device can include node information of each node device that transmits the first iOAM packet, in the measurement domain, so that the notification message includes the node information of each node device that transmits the first iOAM packet, in the measurement domain.

Specifically, in an optional implementation, that the tail node device detects whether the tail node device triggers, in a process of transmitting the first iOAM packet, an important event that meets a predetermined condition includes:
The tail node device obtains a congestion parameter of an egress port of the tail node device. The congestion parameter includes an explicit congestion notification ECN threshold.

When the congestion parameter is greater than a preset congestion threshold, the tail node device determines that the tail node device triggers, in the process of transmitting the first iOAM packet, the important event that meets the predetermined condition.

When the tail node device determines that the tail node device triggers, in the process of transmitting the first iOAM packet, the important event that meets the predetermined condition, the tail node device adds the tail node information to the first iOAM packet. The tail node information includes a node identifier of the tail node device, a time at which the first iOAM packet arrives at an ingress port of the tail node device, and a time at which the first iOAM packet arrives at the egress port of the tail node device.

Specifically, in an optional implementation, that the tail node device detects whether the tail node device triggers, in a process of transmitting the first iOAM packet, an important event that meets a predetermined condition includes:
The tail node device obtains a first time at which the first iOAM packet arrives at an ingress port of the tail node device, and a second time at which the first iOAM packet arrives at an egress port of the tail node device.

When a time difference between the second time and the first time is greater than a preset time threshold, the tail node device determines that the tail node device triggers, in the process of transmitting the first iOAM packet, the important event that meets the predetermined condition.

When the tail node device determines that the tail node device triggers, in the process of transmitting the first iOAM packet, the important event that meets the predetermined condition, the tail node device adds the tail node information to the first iOAM packet. The tail node information includes a node identifier of the tail node device, a time at which the first iOAM packet arrives at the ingress port of the tail node device, and a time at which the first iOAM packet arrives at the egress port of the tail node device.

Specifically, in an optional implementation, that the tail node device detects whether the tail node device triggers, in a process of transmitting the first iOAM packet, an important event that meets a predetermined condition includes:
The tail node device obtains a characteristic parameter of a data flow corresponding to the first iOAM packet.

The tail node device compares the characteristic parameter of the data flow corresponding to the first iOAM packet with a characteristic parameter of a data flow corresponding to a target iOAM packet stored in the tail node device. The target iOAM packet is an iOAM packet previously obtained by the tail node device.

When the characteristic parameter of the data flow corresponding to the first iOAM packet is the same as the characteristic parameter of the data flow corresponding to the target iOAM packet, the tail node device compares a port that is of the tail node device and that corresponds to the first iOAM packet with a port that is of the tail node device and that corresponds to the target iOAM packet. The port includes an ingress port and/or an egress port.

When the port that is of the tail node device and that corresponds to the first iOAM packet is different from the port that is of the tail node device and that corresponds to the target iOAM packet, the tail node device determines that the tail node device triggers, in the process of transmitting the first iOAM packet, the important event that meets the predetermined condition.

When the tail node device determines that the tail node device triggers, in the process of transmitting the first iOAM packet, the important event that meets the predetermined condition, the tail node device adds the tail node information to the first iOAM packet. The tail node information includes a node identifier of the tail node device and a port identifier of the tail node device. The port identifier includes an ingress port identifier and/or an egress port identifier.

In an optional design, the notification message further includes identifier information of the first iOAM packet. The identifier information includes a flow identifier and a sequence number that are of the first iOAM packet. The flow identifier indicates a data flow to which the first iOAM packet belongs. The sequence number indicates a location of the first iOAM packet in the data flow.

In an optional design, the important data identifier includes a device identifier of a node device that triggers the important event.

In an optional design, the important data identifier includes an event type identifier of the important event that is triggered.

According to a second aspect, an embodiment of this application discloses an in-situ operation, administration, and maintenance iOAM packet transmission method. The method is applied to an iOAM network. The iOAM network includes a measurement domain. The measurement domain includes a first node device. The method includes:
The first node device obtains a first iOAM packet. The first iOAM packet includes service data transmitted in the iOAM network.

The first node device determines whether the first node device triggers, in a process of transmitting the first iOAM packet, an important event that meets a predetermined condition.

When the first node device determines that the first node device triggers, in the process of transmitting the first iOAM packet, the important event that meets the predetermined condition, the first node device updates the first iOAM packet. An updated first iOAM packet includes an important data identifier, first node information, and service data. The first node information indicates information about the first node device that transmits the first iOAM packet.

The first node device forwards the updated first iOAM packet to a next-hop node device of the first node device.

According to the implementation, when determining that the first node device triggers, in the process of transmitting the first iOAM packet, the important event that meets the predetermined condition, the first node device can update the first iOAM packet. The updated first iOAM packet includes the important data identifier, so that important data is identified to mark the first iOAM packet. Therefore, a tail node device can detect whether to generate a notification message based on the first iOAM packet and report the notification message, to reduce an amount of data reported by the tail node device.

In an optional design, the important data identifier is located in a preset field in a general packet header of the updated first iOAM packet;
the important data identifier is located in a preset field in an iOAM packet header of the updated first iOAM packet;
the important data identifier is located in the service data included in the updated first iOAM packet; or
the important data identifier is located in a preset field between an iOAM packet header and the service data that are of the updated first iOAM packet.

Specifically, in an optional implementation, that the first node device determines whether the first node device triggers, in a process of transmitting the first iOAM packet, an important event that meets a predetermined condition includes:
The first node device obtains a congestion parameter of an egress port of the first node device. The congestion parameter includes an explicit congestion notification ECN threshold.

When the congestion parameter is greater than a preset congestion threshold, the first node device determines that the first node device triggers, in the process of transmitting the first iOAM packet, the important event that meets the predetermined condition.

The first node information includes a node identifier of the first node device, a time at which the first iOAM packet arrives at an ingress port of the first node device, and a time at which the first iOAM packet arrives at the egress port of the first node device.

Specifically, in an optional implementation, that the first node device determines whether the first node device triggers, in a process of transmitting the first iOAM packet, an important event that meets a predetermined condition includes:
The first node device obtains a first time at which the first iOAM packet arrives at an ingress port of the first node device, and a second time at which the first iOAM packet arrives at an egress port of the first node device.

When a time difference between the second time and the first time is greater than a preset time threshold, the first node device determines that the first node device triggers, in the process of transmitting the first iOAM packet, the important event that meets the predetermined condition.

The first node information includes a node identifier of the first node device, a time at which the first iOAM packet arrives at the ingress port of the first node device, and a time at which the first iOAM packet arrives at the egress port of the first node device.

Specifically, in an optional implementation, that the first node device determines whether the first node device triggers, in a process of transmitting the first iOAM packet, an important event that meets a predetermined condition includes:
The first node device obtains a characteristic parameter of a data flow corresponding to the first iOAM packet.

The first node device compares the characteristic parameter of the data flow corresponding to the first iOAM packet with a characteristic parameter of a data flow corresponding to a target iOAM packet stored in the first node device. The target iOAM packet is an iOAM packet previously obtained by the first node device.

When the characteristic parameter of the data flow corresponding to the first iOAM packet is the same as the characteristic parameter of the data flow corresponding to the target iOAM packet, the first node device compares a port that is of the first node device and that corresponds to the first iOAM packet with a port that is of the first node device and that corresponds to the target iOAM packet. The port includes an ingress port and/or an egress port.

When the port that is of the first node device and that corresponds to the first iOAM packet is different from the port that is of the first node device and that corresponds to the target iOAM packet, the first node device determines that the first node device triggers, in the process of transmitting the first iOAM packet, the important event that meets the predetermined condition.

The first node information includes a node identifier of the first node device and a port identifier of the first node device. The port identifier includes an ingress port identifier and/or an egress port identifier.

According to a third aspect, an embodiment of this application discloses an in-situ operation, administration, and maintenance iOAM packet transmission apparatus. The apparatus is applied to an iOAM network. The iOAM network includes a measurement domain. The measurement domain includes a tail node device. The tail node device is an egress device in the measurement domain. The apparatus is disposed in the tail node device. The apparatus includes:
a transmitter, a receiver, and a processor.

The receiver is configured to receive a first iOAM packet sent by a first node device, where the first iOAM packet includes first node information and service data, the first node information indicates information about the first node device that transmits the first iOAM packet, and the measurement domain includes the first node device.

The processor is configured to determine whether the first iOAM packet includes an important data identifier. The important data identifier indicates a node device in the measurement domain to trigger, in a process of transmitting the first iOAM packet, an important event that meets a predetermined condition.

When determining that the first iOAM packet includes the important data identifier, the processor is further configured to generate a notification message based on the first iOAM packet.

The transmitter is configured to send the notification message to a management device in the iOAM network. The notification message includes the first node information.

In an optional design, the processor is further configured to: when determining that the first iOAM packet does not include the important data identifier, skip generating the notification message.

In an optional design, the notification message further includes tail node information. The tail node information indicates information about the tail node device that transmits the first iOAM packet.

In an optional design, the processor is further configured to: before determining whether the first iOAM packet includes the important data identifier, detect whether the tail node device triggers, in a process of transmitting the first iOAM packet, an important event that meets a predetermined condition; and
when determining that the tail node device triggers, in the process of transmitting the first iOAM packet, the important event that meets the predetermined condition, the processor is further configured to update an important data identifier in the first iOAM packet.

Specifically, in an optional implementation, the processor is specifically configured to receive the first iOAM packet sent by the first node device and forwarded by a second node device, and the first iOAM packet further includes second node information.

The second node information indicates the second node device that transmits the first iOAM packet.

The second node information is node information encapsulated by the second node device in the first iOAM packet.

The notification message further includes the second node information.

Specifically, in an optional implementation, the processor is specifically configured to obtain a congestion parameter of an egress port of the tail node device, and the congestion parameter includes an explicit congestion notification ECN threshold.

When the congestion parameter is greater than a preset congestion threshold, the processor determines that the tail node device triggers, in the process of transmitting the first iOAM packet, the important event that meets the predetermined condition.

When determining that the tail node device triggers, in the process of transmitting the first iOAM packet, the important event that meets the predetermined condition, the processor is further configured to add the tail node information to the first iOAM packet. The tail node information includes a node identifier of the tail node device, a time at which the first iOAM packet arrives at an ingress port of the tail node device, and a time at which the first iOAM packet arrives at the egress port of the tail node device.

Specifically, in an optional implementation, the processor is specifically configured to obtain a first time at which the first iOAM packet arrives at an ingress port of the tail node device, and a second time at which the first iOAM packet arrives at an egress port of the tail node device.

When a time difference between the second time and the first time is greater than a preset time threshold, the processor determines that the tail node device triggers, in the process of transmitting the first iOAM packet, the important event that meets the predetermined condition.

When determining that the tail node device triggers, in the process of transmitting the first iOAM packet, the important event that meets the predetermined condition, the processor is further configured to add the tail node information to the first iOAM packet. The tail node information includes a node identifier of the tail node device, a time at which the first iOAM packet arrives at the ingress port of the tail node device, and a time at which the first iOAM packet arrives at the egress port of the tail node device.

In an optional design, the processor is specifically configured to obtain a characteristic parameter of a data flow corresponding to the first iOAM packet.

The processor compares the characteristic parameter of the data flow corresponding to the first iOAM packet with a characteristic parameter of a data flow corresponding to a target iOAM packet stored in the tail node device. The target iOAM packet is an iOAM packet previously obtained by the tail node device.

When the characteristic parameter of the data flow corresponding to the first iOAM packet is the same as the characteristic parameter of the data flow corresponding to the target iOAM packet, the processor compares a port that is of the tail node device and that corresponds to the first iOAM packet with a port that is of the tail node device and that corresponds to the target iOAM packet. The port includes an ingress port and/or an egress port.

When the port that is of the tail node device and that corresponds to the first iOAM packet is different from the port that is of the tail node device and that corresponds to the target iOAM packet, the processor determines that the tail node device triggers, in the process of transmitting the first iOAM packet, the important event that meets the predetermined condition.

When determining that the tail node device triggers, in the process of transmitting the first iOAM packet, the important event that meets the predetermined condition, the processor adds the tail node information to the first iOAM packet. The tail node information includes a node identifier of the tail node device and a port identifier of the tail node device, and the port identifier includes an ingress port identifier and/or an egress port identifier.

In an optional design, the notification message further includes identifier information of the first iOAM packet, the identifier information includes a flow identifier and a sequence number that are of the first iOAM packet, the flow identifier indicates a data flow to which the first iOAM packet belongs, and the sequence number indicates a location of the first iOAM packet in the data flow.

In an optional design, the important data identifier includes a device identifier of a node device that triggers the important event.

In an optional design, the important data identifier includes an event type identifier of the important event that is triggered.

According to a fourth aspect, an embodiment of this application discloses an in-situ operation, administration, and maintenance iOAM packet transmission apparatus. The apparatus is applied to an iOAM network. The iOAM network includes a measurement domain. The measurement domain includes a first node device. The apparatus is disposed in the first node device. The apparatus includes:
a transmitter, a receiver, and a processor.

The receiver is configured to obtain a first iOAM packet. The first iOAM packet includes service data transmitted in the iOAM network.

The processor is configured to determine whether the first node device triggers, in a process of transmitting the first iOAM packet, an important event that meets a predetermined condition.

When the processor determines that the first node device triggers, in the process of transmitting the first iOAM packet, the important event that meets the predetermined condition, the processor updates the first iOAM packet. An updated first iOAM packet includes an important data identifier, first node information, and service data, where the first node information indicates information about the first node device that transmits the first iOAM packet.

The transmitter is configured to forward the updated first iOAM packet to a next-hop node device of the first node device.

In an optional design, the important data identifier is located in a preset field in a general packet header of the updated first iOAM packet;
the important data identifier is located in a preset field in an iOAM packet header of the updated first iOAM packet;
the important data identifier is located in the service data included in the updated first iOAM packet; or
the important data identifier is located in a preset field between an iOAM packet header and the service data that are of the updated first iOAM packet.

Specifically, in an optional implementation, the processor is specifically configured to obtain a congestion parameter of an egress port of the first node device, where the congestion parameter includes an explicit congestion notification ECN threshold.

When the congestion parameter is greater than a preset congestion threshold, the processor determines that the first node device triggers, in the process of transmitting the first iOAM packet, the important event that meets the predetermined condition.

The first node information includes a node identifier of the first node device, a time at which the first iOAM packet arrives at an ingress port of the first node device, and a time at which the first iOAM packet arrives at the egress port of the first node device.

Specifically, in an optional implementation, the processor is specifically configured to obtain a first time at which the first iOAM packet arrives at an ingress port of the first node device, and a second time at which the first iOAM packet arrives at an egress port of the first node device.

When a time difference between the second time and the first time is greater than a preset time threshold, the processor determines that the first node device triggers, in the process of transmitting the first iOAM packet, the important event that meets the predetermined condition.

The first node information includes a node identifier of the first node device, a time at which the first iOAM packet arrives at the ingress port of the first node device, and a time at which the first iOAM packet arrives at the egress port of the first node device.

Specifically, in an optional implementation, the processor is specifically configured to obtain a characteristic parameter of a data flow corresponding to the first iOAM packet.

The processor compares the characteristic parameter of the data flow corresponding to the first iOAM packet with a characteristic parameter of a data flow corresponding to a target iOAM packet stored in the first node device. The target iOAM packet is an iOAM packet previously obtained by the first node device.

When the characteristic parameter of the data flow corresponding to the first iOAM packet is the same as the characteristic parameter of the data flow corresponding to the target iOAM packet, the processor compares a port that is of the first node device and that corresponds to the first iOAM packet with a port that is of the first node device and that corresponds to the target iOAM packet. The port includes an ingress port and/or an egress port.

When the port that is of the first node device and that corresponds to the first iOAM packet is different from the port that is of the first node device and that corresponds to the target iOAM packet, the processor determines that the first node device triggers, in the process of transmitting the first iOAM packet, the important event that meets the predetermined condition.

The first node information includes a node identifier of the first node device and a port identifier of the first node device. The port identifier includes an ingress port identifier and/or an egress port identifier.

According to a fifth aspect, this application further provides an in-situ operation, administration, and maintenance iOAM packet transmission apparatus. The apparatus is disposed in a tail node device. The tail node device is applied to a measurement domain included in an iOAM network. The tail node device is an egress device in the measurement domain. The apparatus includes units configured to perform the method steps in the first aspect and the implementations of the first aspect.

According to a sixth aspect, this application further provides an in-situ operation, administration, and maintenance iOAM packet transmission apparatus. The apparatus is disposed in a first node device. The first node device is applied to a measurement domain included in an iOAM network. The apparatus includes units configured to perform the method steps in the second aspect and the implementations of the second aspect.

According to a seventh aspect, an embodiment of this application discloses an in-situ operation, administration, and maintenance iOAM packet transmission device, configured as a tail node device. The tail node device is applied to a measurement domain included in an iOAM network. The tail node device is an egress device in the measurement domain. The device includes:
a processor and a memory.

The memory is configured to store a program instruction.

The processor is configured to invoke and execute the program instruction stored in the memory, so that the tail node device performs the method in any one of the first aspect or the possible designs of the first aspect.

According to an eighth aspect, an embodiment of this application discloses an in-situ operation, administration, and maintenance iOAM packet transmission device, configured as a first node device. The first node device is applied to a measurement domain included in an iOAM network. The first node device is an egress device in the measurement domain. The device includes:
a processor and a memory.

The memory is configured to store a program instruction.

The processor is configured to invoke and execute the program instruction stored in the memory, so that the first node device performs the method in any one of the second aspect or the possible designs of the second aspect.

According to a ninth aspect, this application provides a computer-readable storage medium. The computer-readable storage medium stores an instruction. When the instruction is run on a computer, the computer is enabled to perform the method in any one of the first aspect or the possible designs of the first aspect.

According to a tenth aspect, this application provides a computer-readable storage medium. The computer-readable storage medium stores an instruction. When the instruction is run on a computer, the computer is enabled to perform the method in any one of the second aspect or the possible designs of the second aspect.

According to an eleventh aspect, this application provides an in-situ operation, administration, and maintenance iOAM packet transmission system. The system is applied to a measurement domain included in an iOAM network. The system includes:
a tail node device and a first node device. The tail node device is an egress device in the measurement domain.

The tail node device is configured to perform the method in any one of the first aspect or the possible designs of the first aspect.

The first node device is configured to perform the method in any one of the second aspect or the possible designs of the second aspect.

In the prior art, each time after obtaining an iOAM packet, the tail node device generates a notification message based on the iOAM packet, and reports the notification message to a management device. Consequently, the tail node device reports the relatively large amount of data to the management device.

However, in the solutions in the embodiments of this application, only when the received first iOAM packet includes the important data identifier, the tail node device generates the notification message based on the first iOAM packet and reports the notification message to the management device. When the node device in the measurement domain in which the tail node device is located triggers, in the process of transmitting the first iOAM packet, the important event that meets the predetermined condition, the first iOAM packet includes the important data identifier. In other words, the tail node device sends the notification message to the management device only when the node device in the measurement domain triggers, in the process of transmitting the first iOAM packet, the important event that meets the predetermined condition. Therefore, compared with the prior art, the solutions in the embodiments of this application can reduce a quantity of notification messages sent by the tail node device to the management device. In other words, an amount of data reported by the tail node device to the management device is reduced, and this resolves the prior-art problem of the relatively large amount of data reported by the tail node device.

### BRIEF DESCRIPTION OF DRAWINGS

To describe the technical solutions in this application more clearly, the following briefly describes the accompanying drawings used in the embodiments. Apparently, a person of ordinary skill in the art may derive other drawings from these accompanying drawings without creative efforts.
FIG. 1 is a schematic diagram of a network structure of an iOAM network in an application scenario according to an embodiment of this application;
FIG. 2 is a schematic diagram of a working procedure of an iOAM packet transmission method according to an embodiment of this application;
FIG. 3 is a schematic diagram of a working procedure of yet another iOAM packet transmission method according to an embodiment of this application;
FIG. 4 is a schematic diagram of a working procedure of yet another iOAM packet transmission method according to an embodiment of this application;
FIG. 5 is a schematic diagram of a working procedure of yet another iOAM packet transmission method according to an embodiment of this application;
FIG. 6 is a schematic diagram of a working procedure of yet another iOAM packet transmission method according to an embodiment of this application;
FIG. 7 is a schematic diagram of a working procedure of yet another iOAM packet transmission method according to an embodiment of this application;
FIG. 8 is a schematic diagram of a format of an iOAM packet according to an embodiment of this application;
FIG. 9 is a schematic diagram of a format of yet another iOAM packet according to an embodiment of this application;
FIG. 10 is a schematic diagram of a structure of an iOAM packet transmission apparatus according to an embodiment of this application;
FIG. 11 is a schematic diagram of a structure of yet another iOAM packet transmission apparatus according to an embodiment of this application;
FIG. 12 is a schematic diagram of a structure of an iOAM packet transmission device according to an embodiment of this application; and
FIG. 13 is a schematic diagram of a structure of an iOAM packet transmission system according to an embodiment of this application.

### DESCRIPTION OF EMBODIMENTS

To resolve a prior-art problem of a relatively large amount of data reported by a tail node device, embodiments of this application disclose an in-situ operation, administration, and maintenance iOAM packet transmission method and apparatus.

The solutions disclosed in the embodiments of this application are applied to an application scenario in which an iOAM packet is transmitted over an iOAM network. The iOAM network usually includes a plurality of node devices. Each node device may be classified into an ingress border node device in the iOAM network, an intermediate node device in the iOAM network, and an egress border node device in the iOAM network based on a position in the iOAM network. After obtaining a service packet, the ingress border node device in the iOAM network encapsulates an iOAM header in the service packet to obtain an iOAM packet. After encapsulating a data collection instruction, the ingress border node device in the iOAM network may further add node information of the ingress border node device to the iOAM packet, and then transmits an iOAM packet to the intermediate node device in the iOAM network. After obtaining the iOAM packet, the intermediate node device in the iOAM network adds node information of the intermediate node device to the iOAM packet when detecting the data collection instruction in the iOAM packet, and transmits an iOAM packet added with the node information to a next-hop node device. After receiving an iOAM packet transmitted by a previous-hop intermediate node device, in an aspect, the egress border node device in the iOAM network decapsulates the iOAM packet to obtain the service packet, and transmits the service packet to a network device outside the iOAM network. In another aspect, when decapsulating the iOAM packet, the egress border node device in the iOAM network obtains node information of each node device, included in the iOAM packet, and then transmits the node information to a management device, so that the management device analyzes the node information. Through the analysis, the management device can detect whether problems such as an excessively long transmission latency and a path change exist in node devices in the iOAM network.

In addition, the iOAM network may include a measurement domain based on an actual detection requirement. The measurement field indicates a measurement range of the iOAM network. The measurement domain may include all or some node devices in the iOAM network. For example, if node devices included in the iOAM network are {R1, R2, R3, R4, R5, R6}, node devices included in the measurement domain are {R1, R2, R3 }, or node devices included in the measurement domain are {R1, R2, R3, R4, R5, R6}, where R1 to R6 each identify a node device. The iOAM network may include a plurality of measurement domains. When the iOAM network includes the plurality of measurement domains, some node devices included in one of the plurality of measurement domains may overlap some node devices included in another of the plurality of measurement domains. For example, node devices included in a measurement domain 1 in the iOAM network are R1, R2, R3, and R4. Node devices included in a measurement domain 2 in the iOAM network are R3, R4, R5, and R6.

In addition, each measurement domain includes at least two node devices. The at least included two node devices include a tail node device in the measurement domain. The tail node device in the measurement domain is an egress device in the measurement domain. After obtaining an iOAM packet, the tail node device in the measurement domain may read node information included in the iOAM packet, and report the node information to the management device.

For example, if an application scenario of the solution disclosed in an embodiment of this application is shown in FIG. 1, node devices included in the iOAM network are {R1, R2, R3, R4, R5, R6}. R1 is an ingress border node device in the iOAM network, node devices {R2, R3, R4, R5} are intermediate node devices in the iOAM network, and R6 is an egress border node device in the iOAM network. Four node devices {R1, R2, R3, R4} may be classified into one measurement domain. R1 is a head node device in the measurement domain, R4 is a tail node device in the measurement domain, and R2 and R3 are intermediate node devices in the measurement domain. In this case, after obtaining an iOAM packet transmitted in the measurement domain, the R4 may read node information included in the iOAM packet, and report the node information to a management device.

In addition, in this embodiment of this application, node information of a node device is trace data (namely, iOAM trace data) of the node device in the iOAM network.

Further, when measurement domains in the iOAM network are classified, overlapped node devices may be in different measurement domains. For example, node devices included in a measurement domain 1 in the iOAM network are R1, R2, R3, and R4. If node devices included in a measurement domain 2 in the iOAM network are R3, R4, R5, and R6, R3 and R4 are overlapped node devices between the two measurement domains.

In this case, corresponding configuration may be performed on tail node devices in the measurement domains. When any tail node device in the measurement domains needs to read and report node information included in an iOAM packet, the iOAM packet is referred to as a target packet of the tail node device. A flow policy of the target packet may be configured on the tail node device. The flow policy of the target packet includes a classification parameter (namely, a flow classification parameter) of a data flow corresponding to the target packet and behavior (namely, a flow behavior parameter) that needs to be performed on the target packet. The flow classification parameter may be any one or a combination of a plurality of parameters in 5-tuple (namely, a source IP address, a destination IP address, a source port, a destination port, and a transport layer protocol) corresponding to the target packet. For example, the flow classification parameter may be three parameters of the 5-tuple corresponding to the target packet. In addition, the flow behavior parameter may be reporting an enabling flag bit, to indicate the tail node device to read the node information in the target packet after obtaining the target packet, and report a notification message that includes the node information.

After receiving one iOAM packet, the tail node device in the measurement domain matches a characteristic parameter of a data flow corresponding to the iOAM packet with the flow classification parameter in the flow policy configured on the tail node device. When the matching succeeds, it is considered that the iOAM packet is the target packet of the tail node device in the measurement domain. In this case, the tail node device executes behavior indicated in the flow behavior parameter. In other words, the tail node device reads node information included in the iOAM packet, generates a notification message based on the node information, and reports the notification message to the management device.

When the flow classification parameter configured on the tail node device in the measurement domain is some parameters in the 5-tuple corresponding to the target packet, and the characteristic parameter of the data flow corresponding to the iOAM packet is totally the same as the flow classification parameter in the flow policy configured on the tail node device, it is considered that the matching succeeds.

In addition, when the flow classification parameter configured on the tail node device in the measurement domain is all parameters in the 5-tuple corresponding to the target packet, and a quantity of same parameters in the data flow characteristic parameter of the iOAM packet and the flow classification parameter in the flow policy is greater than a preset quantity threshold, it is considered that the matching succeeds.

For example, if the iOAM network is shown in FIG. 1, four node devices R1 to R4 form a first measurement domain, and a node device R4 is a tail node device in the first measurement domain. After obtaining a first target packet, the R4 needs to report node information included in the first target packet. In addition, three node devices R4 to R6 form a second measurement domain, and a node device R6 is a tail node device in the second measurement domain. After obtaining a second target packet, the R6 needs to report node information included in the second target packet. In this case, a first flow policy based on the first target packet needs to be configured on R4, and a second flow policy based on the second target packet needs to be configured on R6. When a first iOAM packet is transmitted to R4, R4 matches a characteristic parameter of a data flow corresponding to the first iOAM packet with a flow classification parameter in the first flow policy. When the matching succeeds, R4 determines that the first iOAM packet is the first target packet. R4 needs to read node information in the first iOAM packet, generate a notification message that includes the node information, and report the notification message. When the matching does not succeed, R4 continuously transmits the first iOAM packet to a next-hop node device R5, and R5 transmits the first iOAM packet to R6. After receiving the first iOAM packet, R6 matches the characteristic parameter of the data flow corresponding to the first iOAM packet with a flow classification parameter in the second flow policy. When the matching succeeds, R6 determines that the first iOAM packet is the second target packet. R6 reads node information in the first iOAM packet, generates a notification message that includes the node information, and report the notification message.

Further, when the configuration is performed on the tail node device, an IP address of the management device and the like may be further configured, so that the tail node device reports information to the management device according to the IP address of the management device.

In addition, when the corresponding configuration is performed on the tail node device in the measurement domain, separate manual configuration may be performed on the tail node device. Alternatively, the management device may deliver corresponding configuration information to the tail node device, to configure the tail node device.

A first embodiment of this application discloses an in-situ operation, administration, and maintenance iOAM packet transmission method. The method is applied to an iOAM network. The iOAM network includes a measurement domain. The measurement domain includes a tail node device. The tail node device is an egress device in the measurement domain.

Referring to a schematic diagram of a working procedure shown in FIG. 2, the iOAM packet transmission method disclosed in this embodiment of this application includes the following steps.

Step S11: The tail node device receives a first iOAM packet sent by a first node device.

The first iOAM packet includes first node information and service data. The first node information indicates information about the first node device that transmits the first iOAM packet. The measurement domain includes the first node device.

The service data indicates data that is included in a service packet and that needs to be transmitted in the iOAM network.

The measurement domain in this embodiment of this application includes the tail node device and the first node device. If there are only the two node devices in the measurement domain, the first node device is a head node device in the measurement domain. After obtaining the service packet, the head node device encapsulates the service packet to obtain the first iOAM packet. The head node device may further add node information of the head node device to the first iOAM packet, to obtain a first iOAM packet that includes the node information of the head node device, and then transmit, to the tail node device, the first iOAM packet that includes the node information of the head node device.

If there are more than two node devices in the measurement domain, the first node device may be an intermediate node device in the measurement domain, or the first node device may be a head node device in the measurement domain. In a possible implementation, the first node device is the intermediate node device in the measurement domain. After obtaining a first iOAM packet transmitted by a previous-hop node device, the intermediate node device adds node information of the intermediate node device to the first iOAM packet, to obtain a first iOAM packet loaded with node information of the first node device, and then transmits the first iOAM packet loaded with the node information of the first node device to a next-hop node device. The next-hop node device is an intermediate node device or a tail node device in the measurement domain. In another possible implementation, the first node device is the head node device in the measurement domain. In addition to a head node device and a tail node device, the measurement domain further includes an intermediate node device between the head node device and the tail node device. A quantity of intermediate node devices is one or more. After obtaining a first iOAM packet, the intermediate node device can transmit the first iOAM packet hop by hop, to transmit the first iOAM packet to the tail node device.

In this embodiment of this application, node information of a node device is trace data (namely, iOAM trace data) of the node device in the iOAM network. Correspondingly, the first node information indicates the information about the first node device that transmits the first iOAM packet. In other words, the first node information is the trace data of the first node device. In other words, if there are only two node devices in the measurement domain. The first node device is the head node device in the measurement domain. The first node information is information about the head node device. If there are more than two node devices in the measurement domain, the first node device may be the intermediate node device in the measurement domain or the head node device in the measurement domain, and the first node information is information about the intermediate node device or information about the head node device.

For example, the iOAM network is shown in FIG. 1. Four node devices {R1, R2, R3, R4} are a measurement domain. R1 is a head node device in the measurement domain. R4 is a tail node device in the measurement domain. R2 and R3 are intermediate node devices in the measurement domain. In this case, the first node device may be R1, or may be R2 or R3. When the first node device is R1, the first node information is information about R1. R1 transmits the first iOAM packet to R2 or R3, and then R2 or R3 transmits the first iOAM packet to R4. Alternatively, the first node device may be R2 or R3. Correspondingly, the first node information is information about R2 or R3. After obtaining the first iOAM packet, R2 or R3 transmits the first iOAM packet to R4.

In addition, after obtaining the first iOAM packet transmitted by a previous-hop node device, each node device in the measurement domain may process the obtained first iOAM packet. For example, each node device adds node information of the node device to the first iOAM packet, or adds an important data identifier to the first iOAM packet. In this embodiment of this application, the first iOAM packet that is processed is still referred to as a first iOAM packet.

For example, when three node devices R1, R2, and R3 in FIG. 1 form a measurement domain. R1 is a head node device, R2 is an intermediate node device, and R3 is a tail node device. After obtaining a service packet, R1 performs an encapsulation operation to obtain an iOAM packet that includes service data, and adds node information of R1 to the iOAM packet. The obtained packet is a first iOAM packet. Then, R1 may further determine whether R1 triggers, in a process of transmitting the first iOAM packet, an important event that meets a predetermined condition. If R1 triggers, in the process of transmitting the first iOAM packet, the important event that meets the predetermined condition, R1 adds an important data identifier to an obtained first iOAM packet. The obtained packet is still referred to as a first iOAM packet. Then, R1 transmits the first iOAM packet to R2. After receiving the first iOAM packet, R2 adds node information of R2 to the first iOAM packet, and when determining that R2 triggers, in a process of transmitting the first iOAM packet, an important event that meets a predetermined condition, R2 further adds an important data identifier. An iOAM packet to which the node information of R2 and the important data identifier are added is still referred to as a first iOAM packet. The first iOAM packet to which the node information and the important data identifier of R2 are added is transmitted to R3.

Step S12: The tail node device determines whether the first iOAM packet includes an important data identifier.

The important data identifier indicates a node device in the measurement domain to trigger, in a process of transmitting the first iOAM packet, an important event that meets a predetermined condition.

After obtaining the first iOAM packet, the node device in the measurement domain determines whether the node device triggers, in the process of transmitting the first iOAM packet, the important event that meets the predetermined condition. For example, the node device in the measurement domain determines whether congestion occurs, and/or whether a packet transmission path changes.

In addition, the node device in the measurement domain may be a type of node device included in the measurement domain, or various types of node devices included in the measurement domain. In other words, the node device in the measurement domain is any type of node device in the measurement domain, or a combination of at least two of a head node device, an intermediate node device, and the tail node device.

If the node device in the measurement domain is the head node device or the intermediate node device in the measurement domain, the head node device or the intermediate node device can determine whether the head node device or the intermediate node device triggers, in the process of transmitting the first iOAM packet, the important event that meets the predetermined condition. If the head node device or the intermediate node device triggers, in the process of transmitting the first iOAM packet, the important event that meets the predetermined condition, the head node device or the intermediate node device adds the important data identifier to the first iOAM packet. In this case, the first iOAM packet obtained by the tail node device includes the important data identifier added by the head node device or the intermediate node device.

If node devices in the measurement domain include the tail node device, it indicates that the tail node device in the measurement domain can determine whether the tail node device triggers, in the process of transmitting the first iOAM packet, the important event that meets the predetermined condition. When determining the tail node device triggers, in the process of transmitting the first iOAM packet, the important event that meets the predetermined condition, the tail node device adds the important data identifier to the first iOAM packet. In this case, the first iOAM packet obtained by the tail node device in the measurement domain includes the important data identifier added by the tail node device.

The important data identifier may include a plurality of forms. The important data identifier may be a preset character. The character may be a plurality of types such as a digit, a letter, and a symbol. For example, the important data identifier may be a fixed value (for example, "1"). In this case, the tail node device detects the preset character, and determines that the first iOAM packet includes the important data identifier. Alternatively, the important data identifier may be a value that increases as a quantity of node devices that trigger the important event that meets the predetermined condition increases. In this case, after triggering the important event that meets the predetermined condition, each node device updates the important data identifier. An updated important data identifier is a result of adding a preset value to the original important data identifier. For example, the updated important data identifier may be the quantity of node devices that trigger the important event. In this case, an important data identifier corresponding to a first node device that triggers the important event is 1. A second node device that triggers the important event updates the value to 2, and so on. The important data identifier may further include a device identifier of the node device that triggers the important event that meets the preset condition. Further, the important event that meets the predetermined condition may be classified in advance. In this case, the important data identifier includes a type identifier of the important event triggered by the node device, and the like.

Step S13: When the tail node device determines that the first iOAM packet includes the important data identifier, the tail node device generates a notification message based on the first iOAM packet, and the tail node device sends the notification message to a management device in the iOAM network, where the notification message includes the first node information.

If the tail node device in the measurement domain determines that the first iOAM packet includes the important data identifier, the tail node device in the measurement domain may read the first node information included in the first iOAM packet, generate the notification message that includes the first node information, and then report the notification message to the management device.

That the tail node device in the measurement domain determines that the first iOAM packet includes the important data identifier includes a plurality of cases. In one case, each node device (namely, a head node device and an intermediate node device) that transmits the first iOAM packet earlier than the tail node device triggers the important event that meets the predetermined condition, and the node device that transmits the first iOAM packet earlier than the tail node device in the measurement domain adds the important data identifier to the first iOAM packet.

In another case, each node device (namely, a head node device and an intermediate node device) that transmits the first iOAM packet earlier than the tail node in the measurement domain does not trigger, in the process of transmitting the first iOAM packet, the important event that meets the predetermined condition, and the tail node device triggers, in the process of transmitting the iOAM packet, the important event that meets the predetermined condition. The tail node device in the measurement domain adds the important data identifier to the first iOAM packet.

In another case, each node device (namely, a head node device and an intermediate node device) that transmits the first iOAM packet earlier than the tail node device in the measurement domain triggers the important event that meets the preset condition, and the tail node device in the measurement domain also triggers, in the process of transmitting the first iOAM packet, the important event that meets the predetermined condition. In this case, the tail node device in the measurement domain may keep the important data identifier that is added by the node device that transmits the first iOAM packet earlier than the tail node device unchanged, or update the important data identifier in the first iOAM packet.

In addition, the tail node device in the measurement domain may report the notification message to the management device in a plurality of manners. The tail node device in the measurement domain may be directly connected to the management device in the iOAM network. After generating the notification message based on the first iOAM packet, the tail node device directly transmits the notification message to the management device. Alternatively, the tail node device in the measurement domain is not directly connected to the management device in the iOAM network, but can connect to the management device through a route. The notification message may be transmitted to the management device in a route forwarding manner.

Further, after obtaining the notification message, the management device in the iOAM network may analyze the notification message, to detect whether problems such as an excessively long transmission latency or a link change occur in a communication process of each node device in the measurement domain.

The embodiment of this application discloses the iOAM packet transmission method. In the method, the tail node device in the measurement domain receives the first iOAM packet sent by the first node device, and determines whether the first iOAM packet includes the important data identifier. If the first iOAM packet includes the important data identifier, the tail node device generates, based on the first iOAM packet, the notification message that includes the first node information, and sends the notification message to the management device in the iOAM network.

In the prior art, each time after obtaining an iOAM packet, a tail node device generates a notification message based on the iOAM packet, and sends the notification message to a management device.

According to the solution in this embodiment of this application, only when the received first iOAM packet includes the important data identifier, the tail node device generates the notification message based on the first iOAM packet and reports the notification message. When the node device in the measurement domain in which the tail node device is located triggers, in the process of transmitting the first iOAM packet, the important event that meets the predetermined condition, the first iOAM packet includes the important data identifier. In other words, the tail node device sends the notification message to the management device only when the node device in the measurement domain triggers, in the process of transmitting the first iOAM packet, the important event that meets the predetermined condition.

Therefore, compared with the prior art, the solution in this embodiment of this application can reduce a quantity of notification messages sent by the tail node device to the management device. In other words, an amount of data reported by the tail node device to the management device is reduced, and this resolves the prior-art problem of the relatively large amount of data reported by the tail node device.

Optionally, in this embodiment of this application, the method further includes:
When the tail node device determines that the first iOAM packet does not include the important data identifier, the tail node device skips generating the notification message.

If the first iOAM packet does not include the important data identifier, it indicates that the node device in the measurement domain does not trigger, in the process of transmitting the first iOAM packet, the important event that meets the predetermined condition, and the management device does not need to perform analysis. Therefore, the tail node device skips generating the notification message. Correspondingly, there is also no need to report the notification message to the management device. Therefore, the amount of data reported by the tail node device to the management device is reduced.

It can be learned from the operation in the step S13 that the notification message includes the first node information. Further, in another embodiment of this application, the notification message further includes tail node information. The tail node information indicates information about the tail node device that transmits the first iOAM packet.

In this embodiment of this application, the tail node information indicates the information about the tail node device that transmits the first iOAM packet. If the tail node device is only the tail node device in the measurement domain, and is not an egress border node device in the entire iOAM network, the tail node device may continuously transmit the first iOAM packet to a next-hop node device hop by hop, until the egress border node device in the iOAM network obtains a first iOAM packet. The egress border node device in the iOAM network may decapsulate the first iOAM packet to obtain a corresponding service packet. For example, if the iOAM network is shown in FIG. 1, four node devices {R1, R2, R3, R4} form a measurement domain, and R4 is a tail node device in the measurement domain. After obtaining the first iOAM packet, R4 may further continuously transmit the first iOAM packet to R5. R5 may further continuously transmit the first iOAM packet to R6. R6 decapsulates the first iOAM packet.

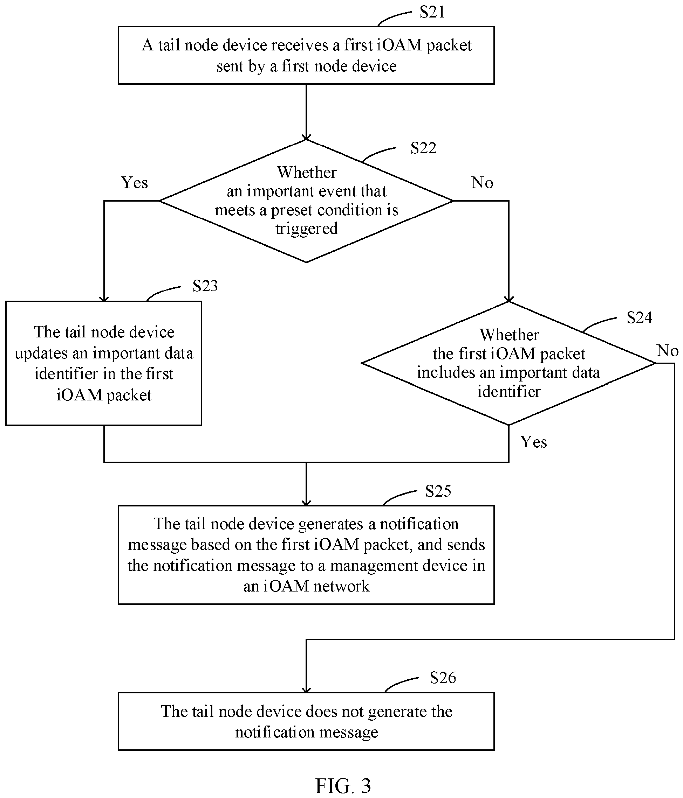

In addition, the tail node device may detect whether the tail node device triggers, in the process of transmitting the first iOAM packet, the important event that meets the predetermined condition. In this case, this application discloses another embodiment. An iOAM packet transmission method disclosed in this embodiment is applied to an iOAM network. The iOAM network includes a measurement domain. The measurement domain includes a tail node device. The tail node device is an egress device in the measurement domain. Referring to a schematic diagram of a working procedure shown in FIG. 3, the iOAM packet transmission method disclosed in this embodiment of this application includes the following steps.

Step S21: The tail node device receives a first iOAM packet sent by a first node device, where the first iOAM packet includes first node information and service data, the first node information indicates information about the first node device that transmits the first iOAM packet, and the measurement domain includes the first node device.

An execution process of the step S21 is the same as an execution process of the step S11, and reference may be made to each other. Details are not described herein again.

Step S22: The tail node device detects whether the tail node device triggers, in a process of transmitting the first iOAM packet, an important event that meets a predetermined condition. If the tail node device triggers, in the process of transmitting the first iOAM packet, the important event that meets the predetermined condition, perform an operation in step S23. If the tail node device does not trigger, in the process of transmitting the first iOAM packet, the important event that meets the predetermined condition, perform an operation in step S24.

Step S23: When the tail node device determines that the tail node device triggers, in the process of transmitting the first iOAM packet, the important event that meets the predetermined condition, the tail node device updates an important data identifier in the first iOAM packet.

Then, perform an operation in step S25.

Alternatively, the tail node device updates an important data identifier in the first iOAM packet, and the tail node device may further perform an operation in the step S24.

If the important data identifier is a fixed identifier (for example, a preset character or a fixed value), when the first iOAM packet already includes the important data identifier, and the tail node device updates the important data identifier in the first iOAM packet, the tail node device may keep the important data identifier in the first iOAM packet unchanged, or overwrite the important data identifier in the first iOAM packet.

In addition, if the important data identifier is a value that increases as a quantity of node devices that trigger the important event that meets the predetermined condition increases, when the tail node device updates the important data identifier in the first iOAM packet, the tail node device determines a value obtained after the current increment based on the original important data identifier in the first iOAM packet, and updates the important data identifier based on the value.

If the important data identifier includes a device identifier of the node device that triggers the important event that meets the predetermined condition, when the tail node device updates the important data identifier in the first iOAM packet, the tail node device adds a device identifier of the tail node device to the first iOAM packet.

If the important data identifier includes a type identifier of the important event triggered by the node device, when the tail node device updates the important data identifier in the first iOAM packet, the tail node device needs to determine a type of the important event triggered by the tail node device, and adds, to the first iOAM packet, the type identifier of the important event triggered by the first iOAM packet.

Step S24: The tail node device determines whether the first iOAM packet includes an important data identifier, where the important data identifier indicates a node device in the measurement domain to trigger, in the process of transmitting the first iOAM packet, the important event that meets the predetermined condition. If the tail node device determines that the first iOAM packet includes the important data identifier, perform an operation in step S25.

Step S25: The tail node device generates a notification message based on the first iOAM packet, and the tail node device sends the notification message to a management device in the iOAM network, where the notification message includes the first node information.

In addition, in the step S24, when the tail node device determines that the first iOAM packet does not include the important data identifier, the following operation may further be performed:
Step S26: The tail node device skips generating the notification message.

In the foregoing embodiment, before the tail node device determines whether the first iOAM packet includes the important data identifier, the following step is further added: The tail node device detects whether the tail node device triggers, in a process of transmitting the first iOAM packet, an important event that meets a predetermined condition. When the tail node device determines that the tail node device triggers, in the process of transmitting the first iOAM packet, the important event that meets the predetermined condition, the tail node device updates an important data identifier in the first iOAM packet.

According to this embodiment, the tail node device can update the important data identifier in the first iOAM packet based on whether the tail node device triggers the important event that meets the predetermined condition.

In addition, the measurement domain usually includes two or more node devices. If the measurement domain includes two node devices, one is a head node device, and the other is the tail node device. The first node device is the head node device. In this case, after obtaining the first iOAM packet, the first node device directly transmits the first iOAM packet to the tail node device.

If the measurement domain includes a plurality of node devices, the first iOAM packet received by the tail node device may be forwarded and transmitted to the tail node device by a plurality of other node devices in the measurement domain. In this case, that the tail node device receives the first iOAM packet sent by the first node device includes:
The tail node device receives the first iOAM packet sent by the first node device and forwarded by a second node device. The first iOAM packet further includes second node information.

The second node information indicates the second node device that transmits the first iOAM packet. The second node information is node information encapsulated by the second node device in the first iOAM packet. The notification message further includes the second node information.

In this case, a next-hop node device of the first node device is the second node device. The second node device is located between the first node device and the tail node device in the measurement domain. The first node device transmits the first iOAM packet to the second node device. The second node device continuously transmits the first iOAM packet until the first iOAM packet is transmitted to the tail node device.

Certainly, an intermediate node device such as a third node device may be further included between the second node device and the tail node device in the measurement domain. In this case, after obtaining the first iOAM packet, the second node device transmits the first iOAM packet to a next-hop node device of the second node device. Each intermediate node device transmits the first iOAM packet in sequence until the first iOAM packet is transmitted to the tail node device.

For example, if four node devices {R1, R2, R3, R4} form a measurement domain, a first node device may be R2, a second node device may be R3, and R4 is a tail node device. In this case, after obtaining the first iOAM packet, the first node device (namely, R2) transmits the first iOAM packet to the second node device (namely, R3). Then, the second node device forwards the first iOAM packet to the tail node device (namely, R4). In addition, after obtaining the first iOAM packet, the second node device adds node information of the second node device (namely, the second node information) to the first iOAM packet, so that a first iOAM packet obtained by the tail node device includes the second node information. Correspondingly, the notification message generated by the tail node device based on the first iOAM packet further includes the second node information, so that the management device can obtain the second node information in the notification message.

According to this embodiment of this application, the first iOAM packet obtained by the tail node device can include node information of each node device that transmits the first iOAM packet, in the measurement domain, so that the notification message includes the node information of each node device that transmits the first iOAM packet, in the measurement domain.

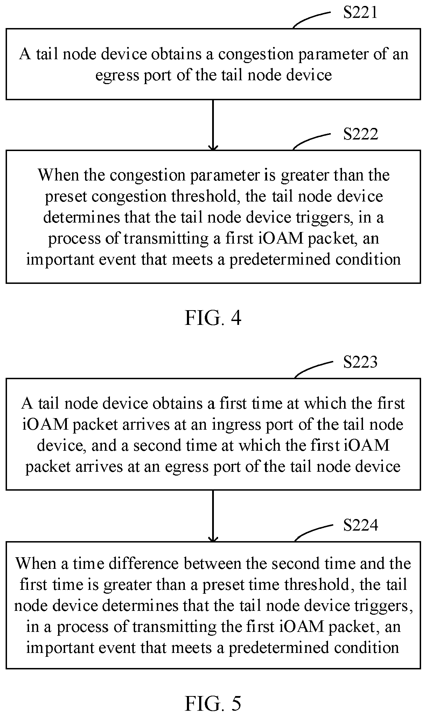

In addition, in the step S22, the tail node device may detect in a plurality of manners, whether the tail node device triggers, in a process of transmitting the first iOAM packet, an important event that meets a predetermined condition. Referring to a schematic diagram of a working procedure shown in FIG. 4, that the tail node device detects whether the tail node device triggers, in a process of transmitting the first iOAM packet, an important event that meets a predetermined condition includes the following steps:
Step S221: The tail node device obtains a congestion parameter of an egress port of the tail node device, where the congestion parameter includes an explicit congestion notification (explicit congestion notification, ECN) threshold.

The congestion parameter of the egress port depends on a quantity of various packets that simultaneously arrive at the egress port. A larger quantity of packets that simultaneously arrive at the egress port usually indicates a severer congestion situation at the egress port, and correspondingly a larger congestion parameter of the egress port.

Step S222: When the congestion parameter is greater than a preset congestion threshold, the tail node device determines that the tail node device triggers, in the process of transmitting the first iOAM packet, the important event that meets the predetermined condition.

When the congestion parameter of the egress port of the tail node device is greater than the preset congestion threshold, it indicates that congestion occurs in the process in which the tail node device transmits the first iOAM packet. A problem of an excessively large transmission latency may occur in the process in which the tail node device transmits the first iOAM packet. In this case, it may be considered that the tail node device triggers, in the process of transmitting the first iOAM packet, the important event that meets the predetermined condition.

When the tail node device determines that the tail node device triggers, in the process of transmitting the first iOAM packet, the important event that meets the predetermined condition, the tail node device adds the tail node information to the first iOAM packet. The tail node information includes a node identifier of the tail node device, a time at which the first iOAM packet arrives at an ingress port of the tail node device, and a time at which the first iOAM packet arrives at the egress port of the tail node device. In this case, the management device determines, based on the received notification message, whether the problem of the excessively long transmission latency occurs in the process in which the tail node device transmits the first iOAM packet.

Specifically, after obtaining the node identifier of the tail node device, the time at which the first iOAM packet arrives at the ingress port of the tail node device, and the time at which the first iOAM packet arrives at the egress port of the tail node device, the management device may determine, based on a time difference between the time at which the first iOAM packet arrives at the ingress port of the tail node device and the time at which the first iOAM packet arrives at the egress port of the tail node device, whether the problem of the excessively long transmission latency occurs in the process in which the tail node device transmits the first iOAM packet.

In addition, if the important event that meets the predetermined condition is that a latency exceeds a threshold, referring to a schematic diagram of a working procedure shown in FIG. 5, that the tail node device detects whether the tail node device triggers, in a process of transmitting the first iOAM packet, an important event that meets a predetermined condition includes the following steps:
Step S223: The tail node device obtains a first time at which the first iOAM packet arrives at an ingress port of the tail node device, and a second time at which the first iOAM packet arrives at an egress port of the tail node device.

Step S224: When a time difference between the second time and the first time is greater than a preset time threshold, the tail node device determines that the tail node device triggers, in the process of transmitting the first iOAM packet, the important event that meets the predetermined condition.

If the time difference between the second time and the first time is greater than the preset time threshold, it indicates that a latency exceeds the preset time threshold in the process in which the tail node device transmits the first iOAM packet. In other words, a problem of an excessively long transmission latency occurs. In this case, it may be considered that the tail node device triggers, in the process of transmitting the first iOAM packet, the important event that meets the preset condition.

Correspondingly, when the tail node device determines that the tail node device triggers, in the process of transmitting the first iOAM packet, the important event that meets the predetermined condition, the tail node device adds the tail node information to the first iOAM packet. The tail node information includes a node identifier of the tail node device, a time at which the first iOAM packet arrives at the ingress port of the tail node device, and a time at which the first iOAM packet arrives at the egress port of the tail node device.

In this case, the management device can detect, based on the received notification message, whether the problem of the excessively long transmission latency occurs in the process in which the tail node device transmits the first iOAM packet.

Specifically, after obtaining the node identifier of the tail node device, the time at which the first iOAM packet arrives at the ingress port of the tail node device, and the time at which the first iOAM packet arrives at the egress port of the tail node device, the management device may calculate a time difference between the time at which the first iOAM packet arrives at the ingress port of the tail node device and the time at which the first iOAM packet arrives at the egress port of the tail node device. If the time difference is greater than a preset time threshold, the management device may determine whether the problem of the excessively long transmission latency occurs in the process in which the tail node device transmits the first iOAM packet.

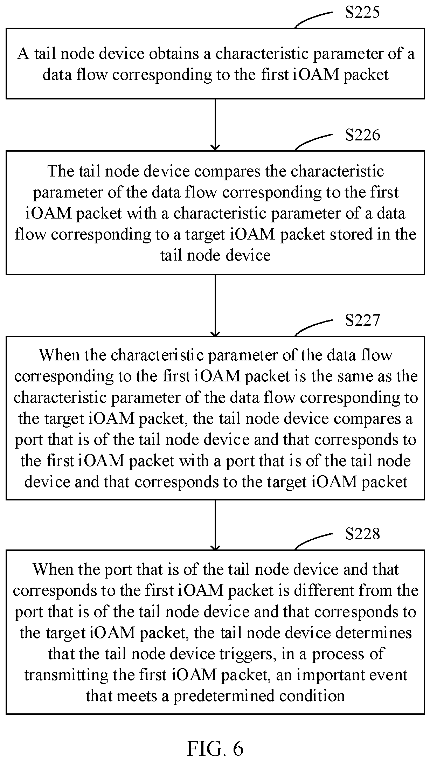

In addition, if the important event that meets the predetermined condition is a path transfer event, referring to a schematic diagram of a working procedure shown in FIG. 6, that the tail node device detects whether the tail node device triggers, in a process of transmitting the first iOAM packet, an important event that meets a predetermined condition includes the following steps:
Step S225: The tail node device obtains a characteristic parameter of a data flow corresponding to the first iOAM packet.

Each service packet obtained by a head node device in the measurement domain may be obtained by splitting a same data flow, or may come from different data flows. The data flow corresponding to the first iOAM packet indicates a data flow in which the service data included in the first iOAM packet is located. The characteristic parameter of the data flow is used to distinguish between different data flows, and the characteristic parameter of the data flow may include a flow identifier of the data flow and/or a 5-tuple of the data flow.

In addition, the characteristic parameter of the data flow is usually loaded into the first iOAM packet, and the characteristic parameter of the data flow corresponding to the first iOAM packet may be obtained by parsing the first iOAM packet.

Step S226: The tail node device compares the characteristic parameter of the data flow corresponding to the first iOAM packet with a characteristic parameter of a data flow corresponding to a target iOAM packet stored in the tail node device. The target iOAM packet is an iOAM packet previously obtained by the tail node device.

In other words, each time after obtaining an iOAM packet, the tail node device stores a characteristic parameter of a data flow corresponding to the iOAM packet.

Step S227: When the characteristic parameter of the data flow corresponding to the first iOAM packet is the same as the characteristic parameter of the data flow corresponding to the target iOAM packet, the tail node device compares a port that is of the tail node device and that corresponds to the first iOAM packet with a port that is of the tail node device and that corresponds to the target iOAM packet. The port includes an ingress port and/or an egress port.

A port that is of the tail node device and that corresponds to a packet indicates a port that is applied to a process in which the tail node device transmits the packet. The port includes the ingress port and/or the egress port.

When the characteristic parameter of the data flow corresponding to the first iOAM packet is the same as the characteristic parameter of the data flow corresponding to the target iOAM packet, it indicates that the first iOAM packet and the target iOAM packet correspond to a same data flow.

Step S228: When the port that is of the tail node device and that corresponds to the first iOAM packet is different from the port that is of the tail node device and that corresponds to the target iOAM packet, the tail node device determines that the tail node device triggers, in the process of transmitting the first iOAM packet, the important event that meets the predetermined condition.

When the characteristic parameter of the data flow corresponding to the first iOAM packet is the same as the characteristic parameter of the data flow corresponding to the target iOAM packet, it indicates that the first iOAM packet and the target iOAM packet correspond to the same data flow. In this case, if the port that is of the tail node device and that corresponds to the first iOAM packet is different from the port that is of the tail node device and that corresponds to the target iOAM packet, it indicates that the port changes in a process in which the tail node device transmits the same data flow. Therefore, it may be determined that path transfer occurs in the process in which the tail node device transmits the first iOAM packet.

When the tail node device determines that the tail node device triggers, in the process of transmitting the first iOAM packet, the important event that meets the predetermined condition, the tail node device adds the tail node information to the first iOAM packet. The tail node information includes a node identifier of the tail node device and a port identifier of the tail node device. The port identifier includes an ingress port identifier and/or an egress port identifier.

In this case, the management device may determine, based on the notification message, whether the path transfer occurs in the process in which the tail node device transmits the first iOAM packet.

Specifically, after obtaining the first node information, the management device searches for another iOAM packet whose characteristic is the same as the characteristic of the data flow corresponding to the first iOAM packet. In other words, the management device searches for another iOAM packet (namely, the target iOAM packet) that belongs to the same data flow as the first iOAM packet. Then, the management device compares whether the first iOAM packet and the target iOAM packet correspond to a same port of the first node device. If the first iOAM packet and the target iOAM packet correspond to the same port of the first node device, it is determined that the path does not change in the process in which the first node device transmits the first iOAM packet. If the first iOAM packet and the target iOAM packet correspond to different ports of the first node device, it is determined that the path changes in the process in which the first node device transmits the first iOAM packet.

Further, in the iOAM packet transmission method disclosed in this embodiment of this application, the notification message further includes identifier information of the first iOAM packet. The identifier information includes a flow identifier and a sequence number that are of the first iOAM packet. The flow identifier indicates a data flow to which the first iOAM packet belongs. The sequence number indicates a location of the first iOAM packet in the data flow.

Further, the important data identifier in this embodiment of this application is a preset character, a quantity of node devices that trigger the important event, a device identifier of the node device that triggers the important event, and/or an event type identifier of the important event that is triggered.

The important data identifier may include a plurality of forms. The important data identifier may be the preset character. The character may be a plurality of types such as a digit, a letter, and a symbol. For example, the important data identifier may be a fixed value (for example, "1"). In this case, the tail node device detects the preset character, and determines that the first iOAM packet includes the important data identifier.

Alternatively, the important data identifier may be a value that increases as the quantity of node devices that trigger the important event that meets the predetermined condition increases. In this case, after triggering the important event that meets the predetermined condition, each node device updates the important data identifier. An updated important data identifier is a result of adding a preset value to the original important data identifier. For example, the updated important data identifier may be the quantity of node devices that trigger the important event. In this case, an important data identifier corresponding to a first node device that triggers the important event is 1. A second node device that triggers the important event updates the value to 2, and so on.

In another feasible manner, the important data identifier includes the device identifier of the node device that triggers the important event. In this case, the generated notification message may further include the device identifier of the node device that triggers the important event. After receiving the notification message, the management device may determine which node device triggers the important event in the process of transmitting the iOAM packet.

In another feasible manner, the important data identifier includes the event type identifier of the important event that is triggered. In this case, the important event that meets the preset condition is classified in advance. The generated notification message may further include the event type identifier of the important event that is triggered. After receiving the notification message, the management device may determine, based on the event type identifier of the important event, which important event is triggered in the process in which the node device transmits the iOAM packet.

Alternatively, the important data identifier includes the event type identifier of the important event that is triggered and the device identifier of the node device that triggers the important event. The notification message includes both the event type identifier of the important event that is triggered and the device identifier of the node device that triggers the important event. In this way, after receiving the notification message, the management device can determine node devices that trigger the important events in the process of transmitting the iOAM packet, and types of important events are respectively triggered by these node devices.

Further, when the important data identifier is the quantity of node devices that trigger the important event, before the tail node device generates a notification message based on the first iOAM packet, the method further includes:

The tail node device detects whether the quantity of node devices that trigger the important event is greater than a preset report threshold, and
when the tail node device determines that the quantity of node devices that trigger the important event is greater than the preset report threshold, the tail node device performs an operation of generating a notification message based on the first iOAM packet.

In this embodiment of this application, when determining that the quantity of node devices that trigger the important event is greater than the preset report threshold, the tail node device generates the notification message. When the tail node device determines that the quantity of node devices that trigger the important event is greater than the preset report threshold, it indicates that the quantity of node devices that trigger the important event is relatively large. In other words, the tail node device generates the notification message only when the quantity of node devices that trigger the important event is relatively large, and reports the notification message to the management device. However, when the quantity of node devices that trigger the important event is relatively small, the tail node device skips generating the notification message, and this further reduces an amount of data of the notification message reported by the tail node device.

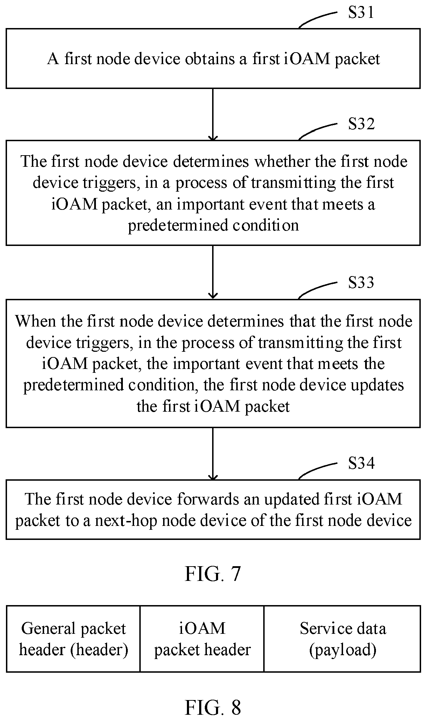

Correspondingly, another embodiment of this application further discloses an in-situ operation, administration, and maintenance iOAM packet transmission method. The method is applied to an iOAM network. The iOAM network includes a measurement domain. The measurement domain includes a first node device. Referring to a schematic diagram of a working procedure shown in FIG. 7, the iOAM packet transmission method includes the following steps.

Step S31: The first node device obtains a first iOAM packet, where the first iOAM packet includes service data transmitted in the iOAM network.

If the first node device is a head node device in the measurement domain, the first node device obtains the corresponding first iOAM packet based on a service packet. The service data indicates data that is included in the service packet and that needs to be transmitted in the iOAM network. For example, the first node device may obtain the first iOAM packet in a manner of encapsulating the service packet.

If the first node device is an intermediate node device in the measurement domain, the first node device may obtain the first iOAM packet forwarded by a head node device or another intermediate node device.

Step S32: The first node device determines whether the first node device triggers, in a process of transmitting the first iOAM packet, an important event that meets a predetermined condition.

Important events that meet the predetermined condition may include a plurality of types. Correspondingly, the first node device may determine, in a plurality of manners, whether the first node device triggers, in the process of transmitting the first iOAM packet, the important event that meets the predetermined condition.

Step S33: When the first node device determines that the first node device triggers, in the process of transmitting the first iOAM packet, the important event that meets the predetermined condition, the first node device updates the first iOAM packet.

An updated first iOAM packet includes an important data identifier, first node information, and service data. The first node information indicates information about the first node device that transmits the first iOAM packet.

The important data identifier may include a plurality of forms. The important data identifier may be a preset character. The character may be a plurality of types such as a digit, a letter, and a symbol. For example, the important data identifier may be a fixed value (for example, "1"). In this case, the tail node device detects the preset character, and determines that the first iOAM packet includes the important data identifier. Alternatively, the important data identifier includes a value that increases as a quantity of node devices that trigger the important event that meets the predetermined condition increases. In this case, after triggering the important event that meets the predetermined condition, each node device updates the important data identifier. An updated important data identifier is a result of adding a preset value to the original important data identifier. For example, the updated important data identifier may be the quantity of node devices that trigger the important event. In this case, an important data identifier corresponding to a first node device that triggers the important event is 1. A second node device that triggers the important event updates the value to 2, and so on. The important data identifier may further include a device identifier of the node device that triggers the important event that meets the preset condition. Further, the important event that meets the predetermined condition may be classified in advance. In this case, the important data identifier includes a type identifier of the important event that is triggered, and the like.

Step S34: The first node device forwards the updated first iOAM packet to a next-hop node device of the first node device.

If the next-hop node device is a tail node device in the measurement domain, the tail node device may generate a corresponding notification message based on whether the first iOAM packet includes the important data identifier. In addition, if the next-hop node device is an intermediate node device in the measurement domain, the intermediate node device may further continuously transmit the first iOAM packet until a tail node device in the measurement domain receives the first iOAM packet.

According to the solution in this embodiment of this application, when determining that the first node device triggers, in the process of transmitting the first iOAM packet, the important event that meets the predetermined condition, the first node device can update the first iOAM packet. The updated first iOAM packet includes the important data identifier, so that important data is identified to mark the first iOAM packet. Therefore, a tail node device can detect whether to generate the notification message based on the first iOAM packet and report the notification message, to reduce an amount of data reported by the tail node device.

The tail node device sends the notification message to a management device only when the node device in the measurement domain triggers, in the process of transmitting the first iOAM packet, the important event that meets the predetermined condition. The tail node device sends the notification message to the management device only when the node device in the measurement domain triggers, in the process of transmitting the first iOAM packet, the important event that meets the predetermined condition.

In addition, in this embodiment of this application, the important data identifier may be set in the first iOAM packet in a plurality of manners. Referring to a schematic diagram of a first iOAM packet shown in FIG. 8, the first iOAM packet includes a general packet header (namely, a header), an iOAM packet header, and service data (namely, a payload). The general packet header usually loads a bearer manner of an iOAM packet, for example, an internet protocol version 6 (internet protocol version 6, IPv6) or multi-protocol label switching (multi-protocol label switching, MPLS). The iOAM packet header usually loads a data collection instruction, and the like.

In this embodiment of this application, the important data identifier may be located in a preset field in a general packet header of the updated first iOAM packet, the important data identifier is located in a preset field in an iOAM packet header of the updated first iOAM packet, or the important data identifier is located in the service data included in the updated first iOAM packet. The important data identifier may be set at the end of the service data. In this case, after receiving the first iOAM packet, the tail node device queries a last field in the service data, to detect whether the first iOAM packet includes the important data identifier. Alternatively, the important data identifier is located in a preset field between an iOAM packet header and the service data that are of the updated first iOAM packet. In this case, the additional field is set between the iOAM packet header and the service data, to add the important data identifier.

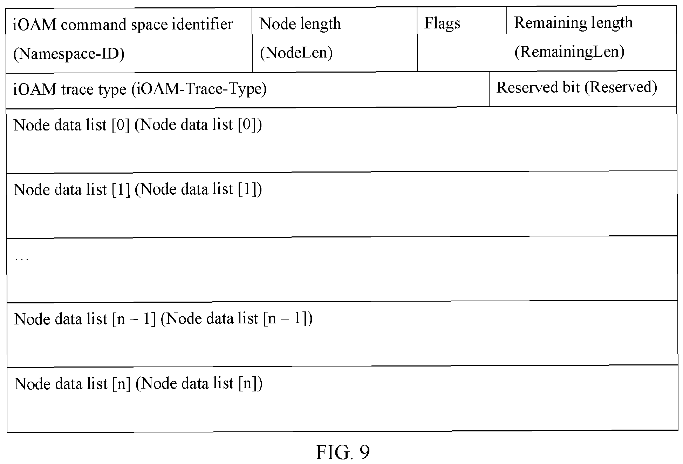

An iOAM packet header is shown in FIG. 9. An "iOAM command space identifier" field (namely, a "Namespace-ID" field) in the iOAM packet header represents an iOAM identifier, and is usually 16 bits long.

A "node length" field (namely, a "NodeLen" field) is used to define a data length (which is usually a 5-bit unsigned integer) that is increased by a multiple of 4 bytes for each node.

A "flags" field is 4 bits long. Bit 0 is used to identify overflow (overflow). When the iOAM packet header does not have sufficient space to record node information, the flag bit is set to 1. Bit 1 is used to indicate a loopback (a loopback flag bit). When the loopback bit is set to 1, an intermediate node device and a tail node device need to send a copy of a packet to a head node device of the iOAM packet. Bits 2 and 3 are reserved and can be used to set important data identifiers.

A "remaining length" field (namely, a "RemainingLen" field) is a 7-bit unsigned integer. The field defines a remaining length range that is a multiple of 4 bytes and that can be used to record data. When a node device adds data to the iOAM packet header, the "RemainingLen" field needs to be reduced based on the "NodeLen" field.

An "iOAM trace type" field (namely, an iOAM-Trace-type) is a 24-bit identifier and is used to define a type of data recorded in a node list. A data type identified by each bit is as follows:
When bit 0 is set to 1, it indicates that node data includes values of Hop_lim and node id.

When bit 1 is set to 1, it indicates that node data includes ingress_if_id and ingress_if_id.

When bit 2 is set to 1, it indicates that node data includes a second-level timestamp.

When bit 3 is set to 1, it indicates that node data includes a sub-second timestamp.

When bit 4 is set to 1, it indicates that node data includes a forward latency.

When bit 5 is set to 1, it indicates that node data includes special data of a namespace type.

When bit 6 is set to 1, it indicates that node data includes a queue depth.

When bit 7 is set to 1, it indicates that node data includes a variable-length opaque snapshot field.

When bit 8 is set to 1, it indicates that node data includes Hop_Lim and node_id stored in a wide format.

When bit 9 is set to 1, it indicates that node data includes ingress_if_id and egress_if_id stored in a wide format.

When bit 10 is set to 1, it indicates that node data includes special data of a namespace type, stored in a wide format.

When bit 11 is set to 1, it indicates that node data includes buffer usage.

Bit 12 to bit 22 are undefined and used to set important data identifiers.

When bit 23 is set to 1, it indicates that node data includes check and padding data of the node data.

A "reserved" field (namely, a "Reserved" field) is 8 bits long, and is used for future use, and may be used to set an important data identifier.

A "node data list" field (namely, a "Node data list" field) is n variable-length fields. A type of data included in the node data list field is determined by an iOAM-Trace-Type bit. Data filled in the node data list is node information. For example, when obtaining a first iOAM packet, a first intermediate node device may add node information of the first intermediate node device to a node data list [1] field of the first iOAM packet. When obtaining a first iOAM packet, a second intermediate node device may add node information of the second intermediate node device to a node data list [2] field of the first iOAM packet. Correspondingly, when obtaining a first iOAM packet, an N^{th} intermediate node device may add node information of the N^{th} intermediate node device to a node data list [n] field of the first iOAM packet.

In addition, the first node device may detect in a plurality of manners, whether the first node device triggers, in the process of transmitting the first iOAM packet, the important event that meets the predetermined condition. In one of the manners, that the first node device determines whether the first node device triggers, in a process of transmitting the first iOAM packet, an important event that meets a predetermined condition includes the following steps.

The first node device obtains a congestion parameter of an egress port of the first node device. The congestion parameter includes an explicit congestion notification ECN threshold.

When the congestion parameter is greater than the preset congestion threshold, the first node device determines that the first node device triggers, in the process of transmitting the first iOAM packet, the important event that meets the predetermined condition.

The congestion parameter of the egress port depends on a quantity of various packets that simultaneously arrive at the egress port. A larger quantity of packets that simultaneously arrive at the egress port usually indicates a severer congestion situation at the egress port, and correspondingly a larger congestion parameter of the egress port.

When the congestion parameter of the egress port of the first node device is greater than the preset congestion threshold, it indicates that congestion occurs in the process in which the first node device transmits the first iOAM packet. In this case, a problem of an excessively large transmission latency may occur in the process in which the first node device transmits the first iOAM packet. Therefore, it is determined that the first node device triggers, in the process of transmitting the first iOAM packet, the important event that meets the predetermined condition.

In this case, the first node information includes a node identifier of the first node device, a time at which the first iOAM packet arrives at an ingress port of the first node device, and a time at which the first iOAM packet arrives at the egress port of the first node device.

After obtaining the notification message, the management device may determine, based on the notification message, whether the problem of the excessively long transmission latency occurs in the process in which the first node device transmits the first iOAM packet.

Specifically, after obtaining the node identifier of the first node device, the time at which the first iOAM packet arrives at the ingress port of the first node device, and the time at which the first iOAM packet arrives at the egress port of the first node device, the management device may determine, based on a time difference between the time at which the first iOAM packet arrives at the ingress port of the first node device and the time at which the first iOAM packet arrives at the egress port of the first node device, whether the problem of the excessively long transmission latency occurs in the process in which the first node device transmits the first iOAM packet.

In another manner, that the first node device determines whether the first node device triggers, in a process of transmitting the first iOAM packet, an important event that meets a predetermined condition includes the following steps.

The first node device obtains a first time at which the first iOAM packet arrives at an ingress port of the first node device, and a second time at which the first iOAM packet arrives at an egress port of the first node device.

When a time difference between the second time and the first time is greater than a preset time threshold, the first node device determines that the first node device triggers, in the process of transmitting the first iOAM packet, the important event that meets the predetermined condition.

If the time difference between the second time and the first time is greater than the preset time threshold, it indicates that a latency in the process in which the first node device transmits the first iOAM packet exceeds the preset time threshold. In other words, a problem of an excessively long transmission latency occurs. In this case, it may be considered that the first node device triggers, in the process of transmitting the first iOAM packet, the important event that meets the preset condition.

In this case, the first node information includes a node identifier of the first node device, a time at which the first iOAM packet arrives at the ingress port of the first node device, and a time at which the first iOAM packet arrives at the egress port of the first node device.

After obtaining the notification message, the management device may determine, based on the notification message, whether the problem of the excessively long transmission path occurs in the process in which the first node device transmits the first iOAM packet.

Specifically, after obtaining the node identifier of the first node device, the time at which the first iOAM packet arrives at the ingress port of the first node device, and the time at which the first iOAM packet arrives at the egress port of the first node device, the management device may calculate a time difference between the time at which the first iOAM packet arrives at the ingress port of the first node device and the time at which the first iOAM packet arrives at the egress port of the first node device. If the time difference is greater than a preset time threshold, the management device may determine that the latency exceeds the threshold in the process in which the first node device transmits the first iOAM packet.

In addition, if the important event that meets the predetermined condition is a path transfer event, that the first node device determines whether the first node device triggers, in a process of transmitting the first iOAM packet, an important event that meets the predetermined condition includes the following steps.

The first node device obtains a characteristic parameter of a data flow corresponding to the first iOAM packet.

The characteristic parameter of the data flow includes a flow identifier of the data flow and/or a 5-tuple of the data flow.

The first node device compares the characteristic parameter of the data flow corresponding to the first iOAM packet with a characteristic parameter of a data flow corresponding to a target iOAM packet stored in the first node device. The target iOAM packet is an iOAM packet previously obtained by the first node device.

When the characteristic parameter of the data flow corresponding to the first iOAM packet is the same as the characteristic parameter of the data flow corresponding to the target iOAM packet, the first node device compares a port that is of the first node device and that corresponds to the first iOAM packet with a port that is of the first node device and that corresponds to the target iOAM packet. The port includes an ingress port and/or an egress port.

When the port that is of the first node device and that corresponds to the first iOAM packet is different from the port that is of the first node device and that corresponds to the target iOAM packet, the first node device determines that the first node device triggers, in the process of transmitting the first iOAM packet, the important event that meets the predetermined condition.

When the characteristic parameter of the data flow corresponding to the first iOAM packet is the same as the characteristic parameter of the data flow corresponding to the target iOAM packet, it indicates that the first iOAM packet and the target iOAM packet correspond to the same data flow. In this case, if the port that is of the first node device and that corresponds to the first iOAM packet is different from the port that is of the first node device and that corresponds to the target iOAM packet, it indicates that the port changes in a process in which the first node device transmits the same data flow. Therefore, it may be determined that path transfer occurs in the process in which the first node device transmits the first iOAM packet.

Correspondingly, in this case, the first node information includes a node identifier of the first node device and a port identifier of the first node device. The port identifier includes an ingress port identifier and/or an egress port identifier.

In this case, after obtaining the notification message, the management device may determine, based on the notification message, whether the path changes in the process in which the first node device transmits the first iOAM packet.

Specifically, after obtaining the first node information, the management device searches for another iOAM packet (namely, the target iOAM packet) whose characteristic is the same as the characteristic of the data flow corresponding to the first iOAM packet. In other words, the management device searches for another iOAM packet that belongs to the same data flow as the first iOAM packet. Then, the management device compares whether the first iOAM packet and the target iOAM packet correspond to a same port of the first node device. If the first iOAM packet and the target iOAM packet correspond to the same port of the first node device, it is determined that the path does not change in the process in which the first node device transmits the first iOAM packet. If the first iOAM packet and the target iOAM packet correspond to different ports of the first node device, it is determined that the path changes in the process in which the first node device transmits the first iOAM packet.

Corresponding to the in-situ operation, administration, and maintenance iOAM packet transmission method, another embodiment of this application further discloses an in-situ operation, administration, and maintenance iOAM packet transmission apparatus. The apparatus is applied to an iOAM network. The iOAM network includes a measurement domain. The measurement domain includes a tail node device. The tail node device is an egress device in the measurement domain. The apparatus is disposed in the tail node device.

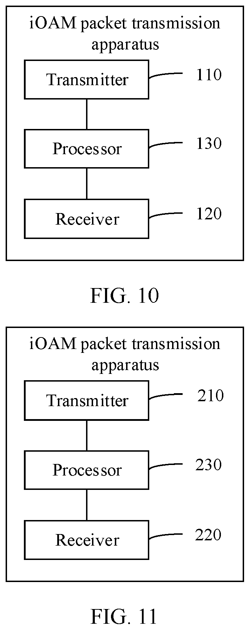

Referring to a schematic diagram of a structure shown in FIG. 10, the apparatus includes a transmitter 110, a receiver 120, and a processor 130.

The receiver 120 is configured to receive a first iOAM packet sent by a first node device. The first iOAM packet includes first node information and service data. The first node information indicates information about the first node device that transmits the first iOAM packet. The measurement domain includes the first node device.

The service data indicates data that is included in a service packet and that needs to be transmitted in the iOAM network.

In this embodiment of this application, node information of a node device is trace data (namely, iOAM trace data) of the node device in the iOAM network. Correspondingly, the first node information indicates the information about the first node device that transmits the first iOAM packet. In other words, the first node information is the trace data of the first node device. In other words, if there are only the two node devices in the measurement domain. The first node device is a head node device in the measurement domain. The first node information is information about the head node device. If there are more than two node devices in the measurement domain, the first node device may be an intermediate node device in the measurement domain or a head node device in the measurement domain, and the first node information is information about the intermediate node device or information about the head node device.

The processor 130 is configured to determine whether the first iOAM packet includes an important data identifier. The important data identifier indicates a node device in the measurement domain to trigger, in a process of transmitting the first iOAM packet, an important event that meets a predetermined condition.

After obtaining the first iOAM packet, the node device in the measurement domain determines whether the node device triggers, in the process of transmitting the first iOAM packet, the important event that meets the predetermined condition. For example, the node device in the measurement domain determines whether congestion occurs, and/or whether a packet transmission path changes.

In addition, the node device in the measurement domain may be a type of node device included in the measurement domain, or various types of node devices included in the measurement domain. In other words, the node device in the measurement domain is any type of node device in the measurement domain, or a combination of at least two of a head node device, an intermediate node device, and a tail node device.

If the node device in the measurement domain is the head node device or the intermediate node device in the measurement domain, the head node device or the intermediate node device can determine whether the head node device or the intermediate node device triggers, in the process of transmitting the first iOAM packet, the important event that meets the predetermined condition. If the head node device or the intermediate node device triggers, in the process of transmitting the first iOAM packet, the important event that meets the predetermined condition, the head node device or the intermediate node device adds the important data identifier to the first iOAM packet. In this case, a first iOAM packet obtained by the tail node device includes the important data identifier added by the head node device or the intermediate node device.

If node devices in the measurement domain include the tail node device, it indicates that the tail node device in the measurement domain can determine whether the tail node device triggers, in the process of transmitting the first iOAM packet, the important event that meets the predetermined condition. When determining the tail node device triggers, in the process of transmitting the first iOAM packet, the important event that meets the predetermined condition, the tail node device adds the important data identifier to the first iOAM packet. In this case, a first iOAM packet obtained by the tail node device in the measurement domain includes the important data identifier added by the tail node device.

When determining that the first iOAM packet includes the important data identifier, the processor 130 is further configured to generate a notification message based on the first iOAM packet.

The transmitter 110 is configured to send the notification message to a management device in the iOAM network. The notification message includes the first node information.

Further, after obtaining the notification message, the management device in the iOAM network may analyze the notification message, to detect whether problems such as an excessively long transmission latency or a link change occur in a communication process of each node device in the measurement domain.

In the prior art, each time after obtaining an iOAM packet, a tail node device generates a notification message based on the iOAM packet, and sends the notification message to a management device.

According to the solution in this embodiment of this application, only when the received first iOAM packet includes the important data identifier, the tail node device generates the notification message based on the first iOAM packet and reports the notification message to the management device. When the node device in the measurement domain in which the tail node device is located triggers, in the process of transmitting the first iOAM packet, the important event that meets the predetermined condition, the first iOAM packet includes the important data identifier. In other words, the tail node device sends the notification message to the management device only when the node device in the measurement domain triggers, in the process of transmitting the first iOAM packet, the important event that meets the predetermined condition.

Therefore, compared with the prior art, the solution in this embodiment of this application can reduce a quantity of notification messages sent by the tail node device to the management device. In other words, an amount of data reported by the tail node device to the management device is reduced, and this resolves the prior-art problem of the relatively large amount of data reported by the tail node device.

Further, in the apparatus in this embodiment of this application, the processor is further configured to: when determining that the first iOAM packet does not include the important data identifier, skip generating the notification message.

If the first iOAM packet does not include the important data identifier, it indicates that the node device in the measurement domain does not trigger, in the process of transmitting the first iOAM packet, the important event that meets the predetermined condition, and the management device does not need to perform analysis. Therefore, the tail node device skips generating the notification message. Correspondingly, there is also no need to report the notification message to the management device. Therefore, the amount of data reported by the tail node device to the management device is reduced.

Further, in the apparatus in this embodiment of this application, the notification message further includes tail node information. The tail node information indicates information about the tail node device that transmits the first iOAM packet.

In this embodiment of this application, the tail node information indicates the information about the tail node device that transmits the first iOAM packet.

In addition, in the apparatus in this embodiment of this application, the processor is further configured to: before determining whether the first iOAM packet includes the important data identifier, detect whether the tail node device triggers, in a process of transmitting the first iOAM packet, an important event that meets a predetermined condition.

When determining that the tail node device triggers, in the process of transmitting the first iOAM packet, the important event that meets the predetermined condition, the processor is further configured to update an important data identifier in the first iOAM packet.

In this case, the processor can update the important data identifier in the first iOAM packet based on whether the tail node device triggers the important event that meets the predetermined condition.

If the measurement domain includes a plurality of node devices, the first iOAM packet received by the tail node device may be forwarded and transmitted to the tail node device by a plurality of other node devices in the measurement domain. In this case, the processor is specifically configured to receive the first iOAM packet sent by the first node device and forwarded by a second node device. The first iOAM packet further includes second node information.

The second node information indicates the second node device that transmits the first iOAM packet.

The second node information is node information encapsulated by the second node device in the first iOAM packet.

The notification message further includes the second node information.

In addition, the processor may detect in a plurality of manners, whether the processor triggers, in the process of transmitting the first iOAM packet, the important event that meets the predetermined condition. In one of the manners, the processor is specifically configured to obtain a congestion parameter of an egress port of the tail node device. The congestion parameter includes an explicit congestion notification ECN threshold.

When the congestion parameter is greater than the preset congestion threshold, the processor determines that the tail node device triggers, in the process of transmitting the first iOAM packet, the important event that meets the predetermined condition.

When determining that the tail node device triggers, in the process of transmitting the first iOAM packet, the important event that meets the predetermined condition, the processor is further configured to add the tail node information to the first iOAM packet. The tail node information includes a node identifier of the tail node device, a time at which the first iOAM packet arrives at an ingress port of the tail node device, and a time at which the first iOAM packet arrives at the egress port of the tail node device.

In this case, the management device determines, based on the received notification message, whether a problem of an excessively long transmission latency occurs in the process in which the tail node device transmits the first iOAM packet.

Specifically, after obtaining the node identifier of the tail node device, the time at which the first iOAM packet arrives at the ingress port of the tail node device, and the time at which the first iOAM packet arrives at the egress port of the tail node device, the management device may determine, based on a time difference between the time at which the first iOAM packet arrives at the ingress port of the tail node device and the time at which the first iOAM packet arrives at the egress port of the tail node device, whether the problem of the excessively long transmission latency occurs in the process in which the tail node device transmits the first iOAM packet.

In another manner, the processor is specifically configured to obtain a first time at which the first iOAM packet arrives at an ingress port of the tail node device, and a second time at which the first iOAM packet arrives at an egress port of the tail node device.

When a time difference between the second time and the first time is greater than a preset time threshold, the processor determines that the tail node device triggers, in the process of transmitting the first iOAM packet, the important event that meets the predetermined condition.

When determining that the tail node device triggers, in the process of transmitting the first iOAM packet, the important event that meets the predetermined condition, the processor is further configured to add the tail node information to the first iOAM packet. The tail node information includes a node identifier of the tail node device, a time at which the first iOAM packet arrives at the ingress port of the tail node device, and a time at which the first iOAM packet arrives at the egress port of the tail node device.

In this case, the management device can detect, based on the received notification message, whether the problem of the excessively long transmission latency occurs in the process in which the tail node device transmits the first iOAM packet.

Specifically, after obtaining the node identifier of the tail node device, the time at which the first iOAM packet arrives at the ingress port of the tail node device, and the time at which the first iOAM packet arrives at the egress port of the tail node device, the management device may calculate a time difference between the time at which the first iOAM packet arrives at the ingress port of the tail node device and the time at which the first iOAM packet arrives at the egress port of the tail node device. If the time difference is greater than a preset time threshold, the management device may determine whether the problem of the excessively long transmission latency occurs in the process in which the tail node device transmits the first iOAM packet.

In another manner, the processor is specifically configured to obtain a characteristic parameter of a data flow corresponding to the first iOAM packet.

The processor compares the characteristic parameter of the data flow corresponding to the first iOAM packet with a characteristic parameter of a data flow corresponding to a target iOAM packet stored in the tail node device, where the target iOAM packet is an iOAM packet previously obtained by the tail node device.

When the characteristic parameter of the data flow corresponding to the first iOAM packet is the same as the characteristic parameter of the data flow corresponding to the target iOAM packet, the processor compares a port that is of the tail node device and that corresponds to the first iOAM packet with a port that is of the tail node device and that corresponds to the target iOAM packet, where the port includes an ingress port and/or an egress port.

When the port that is of the tail node device and that corresponds to the first iOAM packet is different from the port that is of the tail node device and that corresponds to the target iOAM packet, the processor determines that the tail node device triggers, in the process of transmitting the first iOAM packet, the important event that meets the predetermined condition.

When determining that the tail node device triggers, in the process of transmitting the first iOAM packet, the important event that meets the predetermined condition, the processor adds the tail node information to the first iOAM packet. The tail node information includes a node identifier of the tail node device and a port identifier of the tail node device, and the port identifier includes an ingress port identifier and/or an egress port identifier.

In this case, the management device may determine, based on the notification message, whether the path transfer occurs in the process in which the tail node device transmits the first iOAM packet.

Specifically, after obtaining the first node information, the management device searches for another iOAM packet whose characteristic is the same as the characteristic of the data flow corresponding to the first iOAM packet. In other words, the management device searches for another iOAM packet (namely, the target iOAM packet) that belongs to the same data flow as the first iOAM packet. Then, the management device compares whether the first iOAM packet and the target iOAM packet correspond to a same port of the first node device. If the first iOAM packet and the target iOAM packet correspond to the same port of the first node device, it is determined that the path does not change in the process in which the first node device transmits the first iOAM packet. If the first iOAM packet and the target iOAM packet correspond to different ports of the first node device, it is determined that the path changes in the process in which the first node device transmits the first iOAM packet.

Further, in this embodiment of this application, the notification message further includes identifier information of the first iOAM packet. The identifier information includes a flow identifier and a sequence number that are of the first iOAM packet. The flow identifier indicates a data flow to which the first iOAM packet belongs. The sequence number indicates a location of the first iOAM packet in the data flow.

Further, in this embodiment of this application, the important data identifier may include a plurality of forms. In a feasible manner, the important data identifier includes a device identifier of a node device that triggers the important event. In this case, the generated notification message may further include the device identifier of the node device that triggers the important event. After receiving the notification message, the management device may determine which node device triggers the important event in the process of transmitting the iOAM packet.

In another feasible manner, the important data identifier includes an event type identifier of the important event that is triggered. In this case, the important event that meets the preset condition is classified in advance. The generated notification message may further include the event type identifier of the important event that is triggered. After receiving the notification message, the management device may determine, based on the event type identifier of the important event, which important event is triggered in the process in which the node device transmits the iOAM packet.

Correspondingly, another embodiment of this application discloses an in-situ operation, administration, and maintenance iOAM packet transmission apparatus. The apparatus is applied to an iOAM network. The iOAM network includes a measurement domain. The measurement domain includes a first node device. The apparatus is disposed in the first node device.

Referring to a schematic diagram of a structure shown in FIG. 11, the apparatus includes a transmitter 210, a receiver 220, and a processor 230.

The receiver 220 is configured to obtain a first iOAM packet. The first iOAM packet includes service data transmitted in the iOAM network.

If the first node device is a head node device in the measurement domain, the first node device obtains the corresponding first iOAM packet based on a service packet. The service data indicates data that is included in the service packet and that needs to be transmitted in the iOAM network. For example, the first node device may obtain the first iOAM packet in a manner of encapsulating the service packet.

If the first node device is an intermediate node device in the measurement domain, the first node device may obtain the first iOAM packet forwarded by a head node device or another intermediate node device.

The processor 230 is configured to determine whether the first node device triggers, in a process of transmitting the first iOAM packet, an important event that meets a predetermined condition.

When the processor determines that the first node device triggers, in the process of transmitting the first iOAM packet, the important event that meets the predetermined condition, the processor updates the first iOAM packet.

An updated first iOAM packet includes an important data identifier, first node information, and service data. The first node information indicates information about the first node device that transmits the first iOAM packet.

The transmitter 210 is configured to forward the updated first iOAM packet to a next-hop node device of the first node device.

If the next-hop node device is a tail node device in the measurement domain, the tail node device may generate a corresponding notification message based on whether the first iOAM packet includes the important data identifier. In addition, if the next-hop node device is an intermediate node device in the measurement domain, the intermediate node device may further continuously transmit the first iOAM packet until a tail node device in the measurement domain receives the first iOAM packet.

According to the solution in this embodiment of this application, when determining that the first node device triggers, in the process of transmitting the first iOAM packet, the important event that meets the predetermined condition, the first node device can update the first iOAM packet. The updated first iOAM packet includes the important data identifier, so that important data is identified to mark the first iOAM packet. Therefore, a tail node device can detect whether to generate the notification message based on the first iOAM packet and report the notification message, to reduce an amount of data reported by the tail node device.

In addition, in this embodiment of this application, the important data identifier may be set in the first iOAM packet in a plurality of manners. In a feasible manner, the important data identifier is located in a preset field in a general packet header of the updated first iOAM packet, the important data identifier is located in a preset field in an iOAM packet header of the updated first iOAM packet, the important data identifier is located in the service data included in the updated first iOAM packet, or the important data identifier is located in a preset field between an iOAM packet header and the service data that are of the updated first iOAM packet.

In addition, the first node device may detect in a plurality of manners, whether the first node device triggers, in the process of transmitting the first iOAM packet, the important event that meets the predetermined condition. In one of the manners, the processor is specifically configured to obtain a congestion parameter of an egress port of the tail node device. The congestion parameter includes an explicit congestion notification ECN threshold.

When the congestion parameter is greater than the preset congestion threshold, the processor determines that the first node device triggers, in the process of transmitting the first iOAM packet, the important event that meets the predetermined condition.

The first node information includes a node identifier of the first node device, a time at which the first iOAM packet arrives at an ingress port of the first node device, and a time at which the first iOAM packet arrives at the egress port of the first node device.

After obtaining the notification message, the management device may determine, based on the notification message, whether a problem of an excessively long transmission latency occurs in the process in which the first node device transmits the first iOAM packet.

Specifically, after obtaining the node identifier of the first node device, the time at which the first iOAM packet arrives at the ingress port of the first node device, and the time at which the first iOAM packet arrives at the egress port of the first node device, the management device may determine, based on a time difference between the time at which the first iOAM packet arrives at the ingress port of the first node device and the time at which the first iOAM packet arrives at the egress port of the first node device, whether the problem of the excessively long transmission latency occurs in the process in which the first node device transmits the first iOAM packet.

In another manner, the processor is specifically configured to obtain a first time at which the first iOAM packet arrives at an ingress port of the first node device, and a second time at which the first iOAM packet arrives at an egress port of the first node device.

When a time difference between the second time and the first time is greater than a preset time threshold, the processor determines that the first node device triggers, in the process of transmitting the first iOAM packet, the important event that meets the predetermined condition.

The first node information includes a node identifier of the first node device, a time at which the first iOAM packet arrives at the ingress port of the first node device, and a time at which the first iOAM packet arrives at the egress port of the first node device.

After obtaining the notification message, the management device may determine, based on the notification message, whether a problem of an excessively long transmission path occurs in the process in which the first node device transmits the first iOAM packet.

Specifically, after obtaining the node identifier of the first node device, the time at which the first iOAM packet arrives at the ingress port of the first node device, and the time at which the first iOAM packet arrives at the egress port of the first node device, the management device may calculate a time difference between the time at which the first iOAM packet arrives at the ingress port of the first node device and the time at which the first iOAM packet arrives at the egress port of the first node device. If the time difference is greater than a preset time threshold, the management device may determine that the latency exceeds a threshold in the process in which the first node device transmits the first iOAM packet.

In addition, if the important event that meets the predetermined condition is a path transfer event, the processor is specifically configured to obtain a characteristic parameter of a data flow corresponding to the first iOAM packet.

The processor compares the characteristic parameter of the data flow corresponding to the first iOAM packet with a characteristic parameter of a data flow corresponding to a target iOAM packet stored in the first node device. The target iOAM packet is an iOAM packet previously obtained by the first node device.

When the characteristic parameter of the data flow corresponding to the first iOAM packet is the same as the characteristic parameter of the data flow corresponding to the target iOAM packet, the processor compares a port that is of the first node device and that corresponds to the first iOAM packet with a port that is of the first node device and that corresponds to the target iOAM packet. The port includes an ingress port and/or an egress port.

When the port that is of the first node device and that corresponds to the first iOAM packet is different from the port that is of the first node device and that corresponds to the target iOAM packet, the processor determines that the first node device triggers, in the process of transmitting the first iOAM packet, the important event that meets the predetermined condition.

The first node information includes a node identifier of the first node device and a port identifier of the first node device. The port identifier includes an ingress port identifier and/or an egress port identifier.

In this case, after obtaining the notification message, the management device may determine, based on the notification message, whether the path changes in the process in which the first node device transmits the first iOAM packet.

Specifically, after obtaining the first node information, the management device searches for another iOAM packet (namely, the target iOAM packet) whose characteristic is the same as the characteristic of the data flow corresponding to the first iOAM packet. In other words, the management device searches for another iOAM packet that belongs to the same data flow as the first iOAM packet. Then, the management device compares whether the first iOAM packet and the target iOAM packet correspond to a same port of the first node device. If the first iOAM packet and the target iOAM packet correspond to the same port of the first node device, it is determined that the path does not change in the process in which the first node device transmits the first iOAM packet. If the first iOAM packet and the target iOAM packet correspond to different ports of the first node device, it is determined that the path changes in the process in which the first node device transmits the first iOAM packet.

Corresponding to the in-situ operation, administration, and maintenance iOAM packet transmission method, another embodiment of this application further discloses an in-situ operation, administration, and maintenance iOAM packet transmission apparatus. The apparatus is disposed in a tail node device. The tail node device is applied to a measurement domain included in an iOAM network. The tail node device is an egress device in the measurement domain.

In an optional embodiment of this application, the iOAM packet transmission apparatus includes a receiving unit, a sending unit, and a processing unit. The receiving unit, the sending unit, and the processing unit are configured to perform all or some of the steps in the embodiments corresponding to FIG. 2 to FIG. 6.

Division into the foregoing units is merely logical function division. During actual implementation, a function of the receiving unit may be integrated into a receiver, a function of the sending unit may be integrated into a transmitter, and a function of the processing unit may be integrated into a processor for implementation. FIG. 10 is a schematic structural diagram of an embodiment of the iOAM packet transmission apparatus disclosed in this embodiment of this application. The apparatus includes a transmitter 110, a receiver 120, and a processor 130.

The receiving unit may be configured to receive a first iOAM packet sent by a first node device. The first iOAM packet includes first node information and service data. The first node information indicates information about the first node device that transmits the first iOAM packet. The measurement domain includes the first node device. The processing unit may be configured to determine whether the first iOAM packet includes an important data identifier. The important data identifier indicates a node device in the measurement domain to trigger, in a process of transmitting the first iOAM packet, an important event that meets a preset condition. When the processing unit determines that the first iOAM packet includes the important data identifier, the processing unit may be further configured to generate a notification message based on the first iOAM packet. The sending unit may be configured to send the notification message to a management device in the iOAM network. The notification message includes the first node information.

For specific content, refer to descriptions of related parts in the embodiments corresponding to FIG. 2 to FIG. 6. Details are not described herein again.

Correspondingly, another embodiment of this application further discloses an in-situ operation, administration, and maintenance iOAM packet transmission method. The apparatus is applied to an iOAM network. The iOAM network includes a measurement domain. The measurement domain includes a first node device. The apparatus is disposed in the first node device.

In an optional embodiment of this application, the iOAM packet transmission apparatus includes a receiving unit, a sending unit, and a processing unit. The receiving unit, the sending unit, and the processing unit are configured to perform all or some of the steps in the embodiment corresponding to FIG. 7.

Division into the foregoing units is merely logical function division. During actual implementation, a function of the receiving unit may be integrated into a receiver, a function of the sending unit may be integrated into a transmitter, and a function of the processing unit may be integrated into a processor for implementation. FIG. 11 is a schematic structural diagram of an embodiment of the iOAM packet transmission apparatus disclosed in this embodiment of this application. The apparatus includes a transmitter 210, a receiver 220, and a processor 230.

For example, the receiving unit may be configured to obtain a first iOAM packet. The first iOAM packet includes service data transmitted in the iOAM network. The processing unit may determine whether the first node device triggers, in a process of transmitting the first iOAM packet, an important event that meets a predetermined condition. When the processor determines that the first node device triggers, in the process of transmitting the first iOAM packet, the important event that meets the predetermined condition, the processor updates the first iOAM packet. An updated first iOAM packet includes an important data identifier, first node information, and service data. The first node information indicates information about the first node device that transmits the first iOAM packet. The sending unit may be configured to forward the updated first iOAM packet to a next-hop node device of the first node device.

For specific content, refer to descriptions of related parts in the embodiment corresponding to FIG. 7. Details are not described herein again.

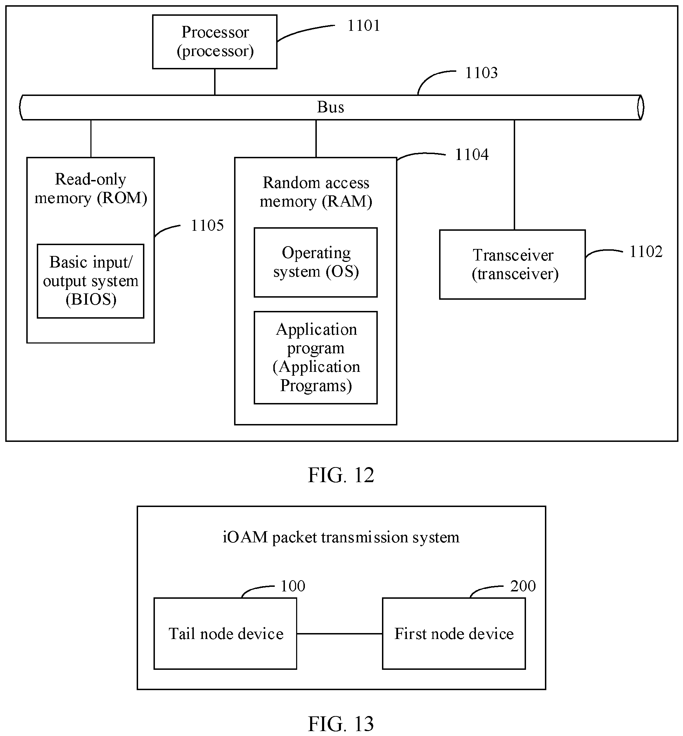

Corresponding to the in-situ operation, administration, and maintenance iOAM packet transmission method, another embodiment of this application further discloses an in-situ operation, administration, and maintenance iOAM packet transmission device. The device is configured as a tail node device. The tail node device is applied to a measurement domain included in an iOAM network. The tail node device is an egress device in the measurement domain. Referring to a schematic diagram shown in FIG. 12, the device includes:
a processor 1101 and a memory.
the memory is configured to store a program instruction, and the processor is configured to invoke and execute the program instruction stored in the memory, so that the tail node device performs all or some of the steps in the embodiments corresponding to FIG. 2 to FIG. 6.

Further, the device may further include a transceiver 1102 and a bus 1103. The memory includes a random access memory 1104 and a read-only memory 1105.

The processor is separately coupled to the transceiver, the random access memory, and the read-only memory through the bus. When the network device needs to be run, the network device is started by using a basic input/output system built in the read-only memory or a bootloader system in an embedded system, and is booted to enter a normal running state. After entering the normal running state, the device runs an application program and an operating system in the random access memory, so that the tail node device performs all or some of the steps in the embodiments corresponding to FIG. 2 to FIG. 6.

The network device in this embodiment of the present invention may correspond to the tail node device in the measurement domain in the embodiments corresponding to FIG. 2 to FIG. 6. In addition, the processor 1101, the transceiver 1102 and the like in the network device may implement functions and/or steps and methods implemented by the tail node device in the measurement domain in the embodiments corresponding to FIG. 2 to FIG. 6. For brevity, details are not described herein again.

It should be noted that in this embodiment, a network device may also be implemented based on a general-purpose physical server in combination with a network function virtualization (English: Network Function Virtualization, NFV) technology, and the network device is a virtual network device (for example, a virtual host, a virtual router, or a virtual switch). The virtual network device may be a virtual machine (English: Virtual Machine, VM) that runs a program used to send an advertisement packet, and the virtual machine is deployed on a hardware device (for example, a physical server). The virtual machine is a software-simulated computer system that has complete hardware system functions and runs in an entirely isolated environment. A person skilled in the art can virtualize a plurality of network devices having the foregoing functions on a general-purpose physical server by reading this application. Details are not described herein.

Corresponding to the in-situ operation, administration, and maintenance iOAM packet transmission method, another embodiment of this application further discloses an in-situ operation, administration, and maintenance iOAM packet transmission device. The device is used as a first node device. The first node device is applied to a measurement domain included in an iOAM network. The device includes:
a processor and a memory.

The memory is configured to store a program instruction. The processor is configured to invoke and execute the program instruction stored in the memory, so that the first node device performs all or some of the steps in the embodiment corresponding to FIG. 7.

Further, the device may further include a transceiver and a bus. The memory includes a random access memory and a read-only memory.

The processor is separately coupled to the transceiver, the random access memory, and the read-only memory through the bus. When the network device needs to be run, the network device is started by using a basic input/output system built in the read-only memory or a bootloader system in an embedded system, and is booted to enter a normal running state. After entering the normal running state, the device runs an application program and an operating system in the random access memory, so that the first node device performs all or some of the steps in the embodiment corresponding to FIG. 7.

The network device in this embodiment of the present invention may correspond to the first node device in the measurement domain in the embodiment corresponding to FIG. 7. In addition, the processor, the transceiver, and the like in the network device may implement functions and/or steps and methods implemented by the first node device in the measurement domain in the embodiment corresponding to FIG. 7. For brevity, details are not described herein again.

It should be noted that in this embodiment, a network device may also be implemented based on a general-purpose physical server in combination with a network function virtualization (English: Network Function Virtualization, NFV) technology, and the network device is a virtual network device (for example, a virtual host, a virtual router, or a virtual switch). The virtual network device may be a virtual machine (English: Virtual Machine, VM) that runs a program used to send an advertisement packet, and the virtual machine is deployed on a hardware device (for example, a physical server). The virtual machine is a software-simulated computer system that has complete hardware system functions and runs in an entirely isolated environment. A person skilled in the art can virtualize a plurality of network devices having the foregoing functions on a general-purpose physical server by reading this application. Details are not described herein.

During specific implementation, an embodiment of this application further provides a computer storage medium. The computer storage medium disposed in any device may store a program. When the program is executed, all or some of the steps in the embodiments corresponding to FIG. 2 to FIG. 6 may be performed. The storage medium in any device may be a magnetic disk, an optical disc, a read-only memory (English: read-only memory, ROM for short), a random access memory (English: random access memory, RAM for short), or the like.

A processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. A memory may include a volatile memory (volatile memory), for example, a random access memory (random access memory, RAM); may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or may include a combination of the foregoing types of memories.

During specific implementation, an embodiment of this application further provides a computer storage medium. The computer storage medium disposed in any device may store a program. When the program is executed, all or some of the steps in the embodiment corresponding to FIG. 7 may be performed. The storage medium in any device may be a magnetic disk, an optical disc, a read-only memory (English: read-only memory, ROM for short), a random access memory (English: random access memory, RAM for short), or the like.

A processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. A memory may include a volatile memory (volatile memory), for example, a random access memory (random-access memory, RAM); may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or may include a combination of the foregoing types of memories.

Correspondingly, an embodiment of this application discloses an in-situ operation, administration, and maintenance iOAM packet transmission system. The system is applied to a measurement domain included in an iOAM network. Referring to a schematic diagram shown in FIG. 13, the system includes:
a tail node device 100 and a first node device 200. The tail node device 100 is an egress device in the measurement domain.

The tail node device 100 is configured to perform all or some steps in the embodiments corresponding to FIG. 2 to FIG. 6.

The first node device 200 is configured to perform all or some steps in the embodiments corresponding to FIG. 7.

According to the system in this embodiment of this application, only when a received first iOAM packet includes an important data identifier, the tail node device generates a notification message based on the first iOAM packet and reports the notification message. When a node device in the measurement domain in which the tail node device is located triggers, in a process of transmitting the first iOAM packet, an important event that meets a predetermined condition, the first iOAM packet includes the important data identifier. In other words, the tail node device sends the notification message to a management device only when the node device in the measurement domain triggers, in the process of transmitting the first iOAM packet, the important event that meets the predetermined condition.

Therefore, compared with the prior art, the solution in this embodiment of this application can reduce a quantity of notification messages sent by the tail node device to the management device. In other words, an amount of data reported by the tail node device to the management device is reduced, and this resolves the prior-art problem of the relatively large amount of data reported by the tail node device.

A person skilled in the art may further understand that various illustrative logical blocks (illustrative logic block) and steps (step) that are listed in the embodiments of this application may be implemented by using electronic hardware, computer software, or a combination thereof. Whether the functions are implemented by using hardware or software depends on particular applications and a design requirement of the entire system. A person of ordinary skill in the art may use various methods to implement the described functions for each particular application, but it should not be considered that the implementation goes beyond the scope of the embodiments of this application.

The various illustrative logical units and circuits described in the embodiments of this application may implement or operate the described functions by using a general purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general purpose processor may be a microprocessor. Optionally, the general purpose processor may alternatively be any conventional processor, management device, micromanagement device, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Optionally, the storage medium may further be integrated into a processor. The processor and the storage medium may be disposed in anASIC, and the ASIC may be disposed in UE. Optionally, the processor and the storage medium may be disposed in different components of the UE.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

The embodiments in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly; for related parts, refer to partial descriptions in the method embodiment.

A person skilled in the art may clearly understand that, the technologies in the embodiments of the present invention may be implemented by software in addition to a necessary general hardware platform. Based on such an understanding, the technical solutions in the embodiments of the present invention essentially, or the part contributing to the prior art may be implemented in the form of a computer software product. The computer software product may be stored in a storage medium, such as an ROM/RAM, a magnetic disk, or an optical disc, and includes several instructions for indicating a computer device (which may be a personal computer, a server, or a network device) to perform the methods described in the embodiments or some parts of the embodiments of the present invention.

For same or similar parts in the embodiments in this specification, refer to each other. Especially, the ... embodiment is basically similar to the method embodiment, and therefore is described briefly. For related parts, refer to descriptions in the method embodiment.

## Claims

1. An in-situ operation, administration, and maintenance, iOAM, packet transmission method, wherein the method is applied to an iOAM network, the iOAM network comprises a measurement domain, the measurement domain comprises a tail node device, the tail node device is an egress device in the measurement domain, and the method comprises:
receiving (S11), by the tail node device, a first iOAM packet sent by a first node device, wherein the first iOAM packet comprises first node information and service data, the first node information indicates information about the first node device that transmits the first iOAM packet, and the measurement domain comprises the first node device;
determining (S12), by the tail node device, whether the first iOAM packet comprises an important data identifier, wherein the important data identifier indicates a node device in the measurement domain to trigger, in a process of transmitting the first iOAM packet, an important event that meets a predetermined condition; and
when the tail node device determines that the first iOAM packet comprises the important data identifier, generating (S13), by the tail node device, a notification message based on the first iOAM packet, and sending, by the tail node device, the notification message to a management device in the iOAM network, wherein the notification message comprises the first node information;
wherein the notification message further comprises tail node information, and the tail node information indicates information about the tail node device that transmits the first iOAM packet; and
wherein before the determining (S12), by the tail node device, whether the first iOAM packet comprises an important data identifier, further comprising:
detecting, by the tail node device, whether the tail node device triggers, in a process of transmitting the first iOAM packet, the important event that meets a predetermined condition comprising determining whether congestion occurs, and/or whether a packet transmission path changes; and
when the tail node device determines that the tail node device triggers, in the process of transmitting the first iOAM packet, the important event that meets the predetermined condition, updating, by the tail node device, an important data identifier in the first iOAM packet; and
wherein the important data identifier comprises a value that increases as a quantity of node devices that trigger the important event that meets the predetermined condition increases.

2. The method according to claim 1, further comprising:
when the tail node device determines that the first iOAM packet does not comprise the important data identifier, skipping generating, by the tail node device, the notification message.

3. The method according to any one of claims 1 to 2, wherein the receiving (S11), by the tail node device, a first iOAM packet sent by a first node device comprises:
receiving, by the tail node device, the first iOAM packet sent by the first node device and forwarded by a second node device, wherein the first iOAM packet further comprises second node information;
the second node information indicates the second node device that transmits the first iOAM packet;
the second node information is node information encapsulated by the second node device in the first iOAM packet; and
the notification message further comprises the second node information.

4. The method according to any of claims claim 1-2, wherein the detecting, by the tail node device, whether the tail node device triggers, in a process of transmitting the first iOAM packet, an important event that meets a predetermined condition comprises:
obtaining, by the tail node device, a congestion parameter of an egress port of the tail node device, wherein the congestion parameter comprises an explicit congestion notification, ECN, threshold;
when the congestion parameter is greater than a preset congestion threshold, determining, by the tail node device, that the tail node device triggers, in the process of transmitting the first iOAM packet, the important event that meets the predetermined condition; and
when the tail node device determines that the tail node device triggers, in the process of transmitting the first iOAM packet, the important event that meets the predetermined condition, adding, by the tail node device, the tail node information to the first iOAM packet, wherein the tail node information comprises a node identifier of the tail node device, a time at which the first iOAM packet arrives at an ingress port of the tail node device, and a time at which the first iOAM packet arrives at the egress port of the tail node device.

5. The method according to any of claims 1-2, wherein the detecting, by the tail node device, whether the tail node device triggers, in a process of transmitting the first iOAM packet, an important event that meets a predetermined condition comprises:
obtaining, by the tail node device, a first time at which the first iOAM packet arrives at an ingress port of the tail node device, and a second time at which the first iOAM packet arrives at an egress port of the tail node device;
when a time difference between the second time and the first time is greater than a preset time threshold, determining, by the tail node device, that the tail node device triggers, in the process of transmitting the first iOAM packet, the important event that meets the predetermined condition; and
when the tail node device determines that the tail node device triggers, in the process of transmitting the first iOAM packet, the important event that meets the predetermined condition, adding, by the tail node device, the tail node information to the first iOAM packet, wherein the tail node information comprises a node identifier of the tail node device, a time at which the first iOAM packet arrives at the ingress port of the tail node device, and a time at which the first iOAM packet arrives at the egress port of the tail node device.

6. The method according to any of claims 1-2, wherein the detecting, by the tail node device, whether the tail node device triggers, in a process of transmitting the first iOAM packet, an important event that meets a predetermined condition comprises:
obtaining, by the tail node device, a characteristic parameter of a data flow corresponding to the first iOAM packet;
comparing, by the tail node device, the characteristic parameter of the data flow corresponding to the first iOAM packet with a characteristic parameter of a data flow corresponding to a target iOAM packet stored in the tail node device, wherein the target iOAM packet is an iOAM packet previously obtained by the tail node device;
when the characteristic parameter of the data flow corresponding to the first iOAM packet is the same as the characteristic parameter of the data flow corresponding to the target iOAM packet, comparing, by the tail node device, a port that is of the tail node device and that corresponds to the first iOAM packet with a port that is of the tail node device and that corresponds to the target iOAM packet, wherein the port comprises an ingress port and/or an egress port;
when the port that is of the tail node device and that corresponds to the first iOAM packet is different from the port that is of the tail node device and that corresponds to the target iOAM packet, determining, by the tail node device, that the tail node device triggers, in the process of transmitting the first iOAM packet, the important event that meets the predetermined condition; and
when the tail node device determines that the tail node device triggers, in the process of transmitting the first iOAM packet, the important event that meets the predetermined condition, adding, by the tail node device, the tail node information to the first iOAM packet, wherein the tail node information comprises a node identifier of the tail node device and a port identifier of the tail node device, and the port identifier comprises an ingress port identifier and/or an egress port identifier.

7. An in-situ operation, administration, and maintenance, iOAM, packet transmission method, wherein the method is applied to an iOAM network, the iOAM network comprises a measurement domain, the measurement domain comprises a first node device, and the method comprises:
obtaining (S31), by the first node device, a first iOAM packet, wherein the first iOAM packet comprises service data transmitted in the iOAM network;
determining (S32), by the first node device, whether the first node device triggers, in a process of transmitting the first iOAM packet, an important event that meets a predetermined condition comprising determining whether congestion occurs, and/or whether a packet transmission path changes;
when the first node device determines that the first node device triggers, in the process of transmitting the first iOAM packet, the important event that meets the predetermined condition, updating (S33), by the first node device, the first iOAM packet, wherein an updated first iOAM packet comprises an important data identifier, first node information, and service data, and the first node information indicates information about the first node device that transmits the first iOAM packet, and wherein the important data identifier comprises a value that increases as a quantity of node devices that trigger the important event that meets the predetermined condition increases; and
forwarding (S34), by the first node device, the updated first iOAM packet to a next-hop node device of the first node device.

8. The method according to claim 7, wherein
the important data identifier is located in a preset field in a general packet header of the updated first iOAM packet;
the important data identifier is located in a preset field in an iOAM packet header of the updated first iOAM packet;
the important data identifier is located in the service data comprised in the updated first iOAM packet; or
the important data identifier is located in a preset field between an iOAM packet header and the service data that are of the updated first iOAM packet.

9. The method according to claim 7 or 8, wherein the determining (S32), by the first node device, whether the first node device triggers, in a process of transmitting the first iOAM packet, an important event that meets a predetermined condition comprises:
obtaining, by the first node device, a congestion parameter of an egress port of the first node device, wherein the congestion parameter comprises an explicit congestion notification, ECN, threshold; and
when the congestion parameter is greater than a preset congestion threshold, determining, by the first node device, that the first node device triggers, in the process of transmitting the first iOAM packet, the important event that meets the predetermined condition; and
the first node information comprises a node identifier of the first node device, a time at which the first iOAM packet arrives at an ingress port of the first node device, and a time at which the first iOAM packet arrives at the egress port of the first node device.

10. The method according to claim 7 or 8, wherein the determining (S32), by the first node device, whether the first node device triggers, in a process of transmitting the first iOAM packet, an important event that meets a predetermined condition comprises:
obtaining, by the first node device, a first time at which the first iOAM packet arrives at an ingress port of the first node device, and a second time at which the first iOAM packet arrives at an egress port of the first node device;
when a time difference between the second time and the first time is greater than a preset time threshold, determining, by the first node device, that the first node device triggers, in the process of transmitting the first iOAM packet, the important event that meets the predetermined condition; and
the first node information comprises a node identifier of the first node device, a time at which the first iOAM packet arrives at the ingress port of the first node device, and a time at which the first iOAM packet arrives at the egress port of the first node device.

11. An in-situ operation, administration, and maintenance, iOAM, packet transmission apparatus, wherein the apparatus is applied to an iOAM network, the iOAM network comprises a measurement domain, the measurement domain comprises a tail node device, the tail node device is an egress device in the measurement domain, the apparatus is disposed in the tail node device, and the apparatus comprises:
a transmitter (110), a receiver (120), and a processor (130), wherein
the receiver (120) is configured to receive a first iOAM packet sent by a first node device, wherein the first iOAM packet comprises first node information and service data, the first node information indicates information about the first node device that transmits the first iOAM packet, and the measurement domain comprises the first node device;
the processor (130) is configured to determine whether the first iOAM packet comprises an important data identifier, wherein the important data identifier indicates a node device in the measurement domain to trigger, in a process of transmitting the first iOAM packet, an important event that meets a predetermined condition, and
when determining that the first iOAM packet comprises the important data identifier, the processor (130) is further configured to generate a notification message based on the first iOAM packet; and
the transmitter (110) is configured to send the notification message to a management device in the iOAM network, wherein the notification message comprises the first node information;
wherein the notification message further comprises tail node information, and the tail node information indicates information about the tail node device that transmits the first iOAM packet; and
wherein
the processor is further configured to: before determining whether the first iOAM packet comprises the important data identifier, detect whether the tail node device triggers, in a process of transmitting the first iOAM packet, an important event that meets a predetermined condition comprising determining whether congestion occurs, and/or whether a packet transmission path changes; and
when determining that the tail node device triggers, in the process of transmitting the first iOAM packet, the important event that meets the predetermined condition, the processor is further configured to update an important data identifier in the first iOAM packet; and
wherein the important data identifier comprises a value that increases as a quantity of node devices that trigger the important event that meets the predetermined condition increases.

12. An in-situ operation, administration, and maintenance, iOAM, packet transmission apparatus, wherein the apparatus is applied to an iOAM network, the iOAM network comprises a measurement domain, the measurement domain comprises a first node device, the apparatus is disposed in the first node device, and the apparatus comprises:
a transmitter (210), a receiver (220), and a processor (230), wherein
the receiver (220) is configured to obtain a first iOAM packet, wherein the first iOAM packet comprises service data transmitted in the iOAM network;
the processor (230) is configured to determine whether the first node device triggers, in a process of transmitting the first iOAM packet, an important event that meets a predetermined condition comprising a determination whether congestion occurs, and/or whether a packet transmission path changes;
when the processor (230) determines that the first node device triggers, in the process of transmitting the first iOAM packet, the important event that meets the predetermined condition, the processor (230) updates the first iOAM packet, wherein an updated first iOAM packet comprises an important data identifier, first node information, and service data, and the first node information indicates information about the first node device that transmits the first iOAM packet, and wherein the important data identifier comprises a value that increases as a quantity of node devices that trigger the important event that meets the predetermined condition increases; and
the transmitter (210) is configured to forward the updated first iOAM packet to a next-hop node device of the first node device.

13. The apparatus according to claim 12, wherein
the important data identifier is located in a preset field in a general packet header of the updated first iOAM packet;
the important data identifier is located in a preset field in an iOAM packet header of the updated first iOAM packet;
the important data identifier is located in the service data comprised in the updated first iOAM packet; or
the important data identifier is located in a preset field between an iOAM packet header and the service data that are of the updated first iOAM packet.

## Patentansprüche

1. "in-situ Operation, Administration and Maintenance"- bzw. iOAM-Paketübertragungsverfahren, wobei das Verfahren auf ein iOAM-Netzwerk angewendet wird, das iOAM-Netzwerk eine Messdomäne umfasst, die Messdomäne eine Endknotenvorrichtung umfasst, die Endknotenvorrichtung eine Ausgangsvorrichtung in der Messdomäne ist und das Verfahren Folgendes umfasst:
Empfangen (S 11), durch die Endknotenvorrichtung, eines durch eine Erstknotenvorrichtung gesendeten ersten iOAM-Pakets, wobei das erste iOAM-Paket Erstknoteninformationen und Dienstdaten umfasst, die Erstknoteninformationen Informationen über die Erstknotenvorrichtung, die das erste iOAM-Paket überträgt, angeben und die Messdomäne die Erstknotenvorrichtung umfasst;
Bestimmen (S12), durch die Endknotenvorrichtung, ob das erste iOAM-Paket eine wichtige Datenkennung umfasst, wobei die wichtige Datenkennung einer Knotenvorrichtung in der Messdomäne angibt, in einem Prozess zum Übertragen des ersten iOAM-Pakets ein wichtiges Ereignis, das eine vorbestimmte Bedingung erfüllt, auszulösen; und
wenn die Endknotenvorrichtung bestimmt, dass das erste iOAM-Paket die wichtige Datenkennung umfasst, Erzeugen (S13), durch die Endgerätevorrichtung, einer Benachrichtigungsnachricht basierend auf dem ersten iOAM-Paket und Senden, durch die Endknotenvorrichtung, der Benachrichtigungsnachricht an eine Verwaltungsvorrichtung in dem iOAM-Netzwerk, wobei die Benachrichtigungsnachricht die Erstknoteninformationen umfasst;
wobei die Benachrichtigungsnachricht ferner Endknoteninformationen umfasst und die Endknoteninformationen Informationen über die Endknotenvorrichtung, die das erste iOAM-Paket überträgt, angeben; und
wobei vor dem Bestimmen (S12), durch die Endknotenvorrichtung, ob das erste iOAM-Paket eine wichtige Datenkennung umfasst, ferner umfassend:
Detektieren, durch die Endknotenvorrichtung, ob die Endknotenvorrichtung in einem Prozess zum Übertragen des ersten iOAM-Pakets das wichtige Ereignis, das eine vorbestimmte Bedingung erfüllt, auslöst, umfassend Bestimmen, ob ein Datenstau auftritt und/oder ob sich ein Paketübertragungspfad ändert; und
wenn die Endknotenvorrichtung bestimmt, dass die Endknotenvorrichtung in dem Prozess zum Übertragen des ersten iOAM-Pakets das wichtige Ereignis, das die vorbestimmte Bedingung erfüllt, auslöst, Aktualisieren, durch die Endknotenvorrichtung, einer wichtigen Datenkennung in dem ersten iOAM-Paket; und
wobei die wichtige Datenkennung einen Wert umfasst, der mit Zunahme einer Menge von Knotenvorrichtungen, die das wichtige Ereignis, das die vorbestimmte Bedingung erfüllt, auslösen, zunimmt.

2. Verfahren nach Anspruch 1, das ferner Folgendes umfasst:
wenn die Endknotenvorrichtung bestimmt, dass das erste iOAM-Paket die wichtige Datenkennung nicht umfasst, Überspringen des Erzeugens, durch die Endknotenvorrichtung, der Benachrichtigungsnachricht.

3. Verfahren nach einem der Ansprüche 1 bis 2, wobei das Empfangen (S11), durch die Endknotenvorrichtung, eines durch eine Erstknotenvorrichtung gesendeten ersten iOAM-Pakets Folgendes umfasst:
Empfangen, durch die Endknotenvorrichtung, des durch die Erstknotenvorrichtung gesendeten und durch eine zweite Knotenvorrichtung weitergeleiteten ersten iOAM-Pakets, wobei das erste iOAM-Paket ferner zweite Knoteninformationen umfasst;
die zweiten Knoteninformationen geben die zweite Knotenvorrichtung an, die das erste iOAM-Paket überträgt;
die zweiten Knoteninformationen sind Knoteninformationen, die durch die zweite Knotenvorrichtung in dem ersten iOAM-Paket eingekapselt werden; und
die Benachrichtigungsnachricht umfasst ferner die zweiten Knoteninformationen.

4. Verfahren nach einem der Ansprüche 1-2, wobei das Detektieren, durch die Endknotenvorrichtung, ob die Endknotenvorrichtung in einem Prozess zum Übertragen des ersten iOAM-Pakets ein wichtiges Ereignis, das eine vorbestimmte Bedingung erfüllt, auslöst, Folgendes umfasst:
Erhalten, durch die Endknotenvorrichtung, eines Datenstauparameters eines Ausgangsports der Endknotenvorrichtung, wobei der Datenstauparameter eine Explizite-Datenstau-Benachrichtigungs- bzw. ECN-Schwelle umfasst;
wenn der Datenstauparameter größer als eine voreingestellte Datenstauschwelle ist, Bestimmen, durch die Endknotenvorrichtung, dass die Endknotenvorrichtung in dem Prozess zum Übertragen des ersten iOAM-Pakets das wichtige Ereignis, das die vorbestimmte Bedingung erfüllt, auslöst; und
wenn die Endknotenvorrichtung bestimmt, dass die Endknotenvorrichtung in dem Prozess zum Übertragen des ersten iOAM-Pakets das wichtige Ereignis, das die vorbestimmte Bedingung erfüllt, auslöst, Hinzufügen, durch die Endknotenvorrichtung, der Endknoteninformationen zu dem ersten iOAM-Paket, wobei die Endknoteninformationen eine Knotenkennung der Endknotenvorrichtung, einen Zeitpunkt, zu dem das erste iOAM-Paket an einem Eingangsport der Endknotenvorrichtung eintrifft, und einen Zeitpunkt, zu dem das erste iOAM-Paket an dem Ausgangsport der Endknotenvorrichtung eintrifft, umfassen.

5. Verfahren nach einem der Ansprüche 1-2, wobei das Detektieren, durch die Endknotenvorrichtung, ob die Endknotenvorrichtung in einem Prozess zum Übertragen des ersten iOAM-Pakets ein wichtiges Ereignis, das eine vorbestimmte Bedingung erfüllt, auslöst, Folgendes umfasst:
Erhalten, durch die Endknotenvorrichtung, eines ersten Zeitpunkts, zu dem das erste iOAM-Paket an einem Eingangsport der Endknotenvorrichtung eintrifft, und eines zweiten Zeitpunkts, zu dem das erste iOAM-Paket an einem Ausgangsport der Endknotenvorrichtung eintrifft;
wenn eine Zeitdifferenz zwischen dem zweiten Zeitpunkt und dem ersten Zeitpunkt größer als eine voreingestellte Zeitschwelle ist, Bestimmen, durch die Endknotenvorrichtung, dass die Endknotenvorrichtung in dem Prozess zum Übertragen des ersten iOAM-Pakets das wichtige Ereignis, das die vorbestimmte Bedingung erfüllt, auslöst; und
wenn die Endknotenvorrichtung bestimmt, dass die Endknotenvorrichtung in dem Prozess zum Übertragen des ersten iOAM-Pakets das wichtige Ereignis, das die vorbestimmte Bedingung erfüllt, auslöst, Hinzufügen, durch die Endknotenvorrichtung, der Endknoteninformationen zu dem ersten iOAM-Paket, wobei die Endknoteninformationen eine Knotenkennung der Endknotenvorrichtung, einen Zeitpunkt, zu dem das erste iOAM-Paket an einem Eingangsport der Endknotenvorrichtung eintrifft, und einen Zeitpunkt, zu dem das erste iOAM-Paket an dem Ausgangsport der Endknotenvorrichtung eintrifft, umfassen.

6. Verfahren nach einem der Ansprüche 1-2, wobei das Detektieren, durch die Endknotenvorrichtung, ob die Endknotenvorrichtung in einem Prozess zum Übertragen des ersten iOAM-Pakets ein wichtiges Ereignis, das eine vorbestimmte Bedingung erfüllt, auslöst, Folgendes umfasst:
Erhalten, durch die Endknotenvorrichtung, eines charakteristischen Parameters eines dem ersten iOAM-Paket entsprechenden Datenflusses;
Vergleichen, durch die Endknotenvorrichtung, des charakteristischen Parameters des dem ersten iOAM-Paket entsprechenden Datenflusses mit einem charakteristischen Parameter eines einem in der Endknotenvorrichtung gespeicherten Ziel-iOAM-Paket entsprechenden Datenflusses, wobei das Ziel-iOAM-Paket ein zuvor durch die Endknotenvorrichtung erhaltenes iOAM-Paket ist;
wenn der charakteristische Parameter des dem ersten iOAM-Paket entsprechenden Datenflusses der gleiche ist wie der charakteristische Parameter des dem Ziel-iOAM-Paket entsprechenden Datenflusses, Vergleichen, durch die Endknotenvorrichtung, eines Ports, der zu der Endknotenvorrichtung gehört und der dem ersten iOAM-Paket entspricht, mit einem Port, der zu der Endknotenvorrichtung gehört und der dem Ziel-iOAM-Paket entspricht, wobei der Port einen Eingangsport und/oder einen Ausgangsport umfasst;
wenn sich der Port, der zu der Endknotenvorrichtung gehört und der dem ersten iOAM-Paket entspricht, von dem Port, der zu der Endknotenvorrichtung gehört und der dem Ziel-iOAM-Paket entspricht, unterscheidet, Bestimmen, durch die Endknotenvorrichtung, dass die Endknotenvorrichtung in dem Prozess zum Übertragen des ersten iOAM-Pakets das wichtige Ereignis, das die vorbestimmte Bedingung erfüllt, auslöst; und
wenn die Endknotenvorrichtung bestimmt, dass die Endknotenvorrichtung in dem Prozess zum Übertragen des ersten iOAM-Pakets das wichtige Ereignis, das die vorbestimmte Bedingung erfüllt, auslöst, Hinzufügen, durch die Endknotenvorrichtung, der Endknoteninformationen zu dem ersten iOAM-Paket, wobei die Endknoteninformationen eine Knotenkennung der Endknotenvorrichtung und eine Portkennung der Endknotenvorrichtung umfassen und die Portkennung eine Eingangsportkennung und/oder eine Ausgangsportkennung umfasst.

7. "in-situ Operation, Administration and Maintenance"- bzw. iOAM-Paketübertragungsverfahren, wobei das Verfahren auf ein iOAM-Netzwerk angewendet wird, das iOAM-Netzwerk eine Messdomäne umfasst, die Messdomäne eine Erstknotenvorrichtung umfasst und das Verfahren Folgendes umfasst:
Erhalten (S31), durch die Erstknotenvorrichtung, eines ersten iOAM-Pakets, wobei das erste iOAM-Paket in dem iOAM-Netzwerk übertragene Dienstdaten umfasst;
Bestimmen (S32), durch die Erstknotenvorrichtung, ob die Erstknotenvorrichtung in einem Prozess zum Übertragen des ersten iOAM-Pakets ein wichtiges Ereignis, das eine vorbestimmte Bedingung erfüllt, auslöst, umfassend Bestimmen, ob ein Datenstau auftritt und/oder ob sich ein Paketübertragungspfad ändert;
wenn die Erstknotenvorrichtung bestimmt, dass die Erstknotenvorrichtung in dem Prozess zum Übertragen des ersten iOAM-Pakets das wichtige Ereignis, das die vorbestimmte Bedingung erfüllt, auslöst, Aktualisieren (S33), durch die Erstknotenvorrichtung, des ersten iOAM-Pakets, wobei ein aktualisiertes erstes iOAM-Paket eine wichtige Datenkennung, Erstknoteninformationen und Dienstdaten umfasst und die Erstknoteninformationen Informationen über die Erstknotenvorrichtung, die das erste iOAM-Paket überträgt, angeben und wobei die wichtige Datenkennung einen Wert umfasst, der mit Zunahme einer Menge von Knotenvorrichtungen, die das wichtige Ereignis, das die vorbestimmte Bedingung erfüllt, auslösen, zunimmt; und
Weiterleiten (S34), durch die Erstknotenvorrichtung, des aktualisierten ersten iOAM-Pakets an eine "Next-Hop"-Knotenvorrichtung der Erstknotenvorrichtung.

8. Verfahren nach Anspruch 7, wobei
sich die wichtige Datenkennung in einem voreingestellten Feld in einem allgemeinen Paketheader des aktualisierten ersten iOAM-Pakets befindet;
sich die wichtige Datenkennung in einem voreingestellten Feld in einem iOAM-Paketheader des aktualisierten ersten iOAM-Pakets befindet;
sich die wichtige Datenkennung in den in dem aktualisierten ersten iOAM-Paket enthaltenen Dienstdaten befindet; oder
sich die wichtige Datenkennung in einem voreingestellten Feld zwischen einem iOAM-Paketheader und den Dienstdaten, die zu dem aktualisierten ersten iOAM-Paket gehören, befindet.

9. Verfahren nach Anspruch 7 oder 8, wobei das Bestimmen (S32), durch die Erstknotenvorrichtung, ob die Erstknotenvorrichtung in einem Prozess zum Übertragen des ersten iOAM-Pakets ein wichtiges Ereignis, das eine vorbestimmte Bedingung erfüllt, auslöst, Folgendes umfasst:
Erhalten, durch die Erstknotenvorrichtung, eines Datenstauparameters eines Ausgangsports der Erstknotenvorrichtung, wobei der Datenstauparameter eine Explizite-Datenstau-Benachrichtigungs- bzw. ECN-Schwelle umfasst; und
wenn der Datenstauparameter größer als eine voreingestellte Datenstauschwelle ist, Bestimmen, durch die Erstknotenvorrichtung, dass die Erstknotenvorrichtung in dem Prozess zum Übertragen des ersten iOAM-Pakets das wichtige Ereignis, das die vorbestimmte Bedingung erfüllt, auslöst; und
die Erstknoteninformationen umfassen eine Knotenkennung der Erstknoteninformationen, einen Zeitpunkt, zu dem das erste iOAM-Paket an einem Eingangsport der Erstknoteninformationen eintrifft, und einen Zeitpunkt, zu dem das erste iOAM-Paket an dem Ausgangsport der Erstknoteninformationen eintrifft.

10. Verfahren nach Anspruch 7 oder 8, wobei das Bestimmen (S32), durch die Erstknotenvorrichtung, ob die Erstknotenvorrichtung in einem Prozess zum Übertragen des ersten iOAM-Pakets ein wichtiges Ereignis, das eine vorbestimmte Bedingung erfüllt, auslöst, Folgendes umfasst:
Erhalten, durch die Erstknotenvorrichtung, eines ersten Zeitpunkts, zu dem das erste iOAM-Paket an einem Eingangsport der Erstknotenvorrichtung eintrifft, und eines zweiten Zeitpunkts, zu dem das erste iOAM-Paket an einem Ausgangsport der Erstknotenvorrichtung eintrifft;
wenn eine Zeitdifferenz zwischen dem zweiten Zeitpunkt und dem ersten Zeitpunkt größer als eine voreingestellte Zeitschwelle ist, Bestimmen, durch die Erstknotenvorrichtung, dass die Erstknotenvorrichtung in dem Prozess zum Übertragen des ersten iOAM-Pakets das wichtige Ereignis, das die vorbestimmte Bedingung erfüllt, auslöst; und
die Erstknoteninformationen umfassen eine Knotenkennung der Erstknotenvorrichtung, einen Zeitpunkt, zu dem das erste iOAM-Paket an einem Eingangsport der Endknotenvorrichtung eintrifft, und einen Zeitpunkt, zu dem das erste iOAM-Paket an dem Ausgangsport der Endknotenvorrichtung eintrifft.

11. "in-situ Operation, Administration and Maintenance"- bzw. iOAM-Paketübertragungseinrichtung, wobei die Einrichtung auf ein iOAM-Netzwerk angewendet wird, das iOAM-Netzwerk eine Messdomäne umfasst, die Messdomäne eine Endknotenvorrichtung umfasst, die Endknotenvorrichtung eine Ausgangsvorrichtung in der Messdomäne ist, die Einrichtung in der Endknotenvorrichtung angeordnet ist und die Einrichtung Folgendes umfasst:
einen Sender (110), einen Empfänger (120) und einen Prozessor (130), wobei der Empfänger (120) ausgelegt ist zum Empfangen eines durch eine Erstknotenvorrichtung gesendeten ersten iOAM-Pakets, wobei das erste iOAM-Paket Erstknoteninformationen und Dienstdaten umfasst, die Erstknoteninformationen Informationen über die Erstknotenvorrichtung, die das erste iOAM-Paket überträgt, angeben und die Messdomäne die Erstknotenvorrichtung umfasst;
der Prozessor (130) ausgelegt ist zum Bestimmen, ob das erste iOAM-Paket eine wichtige Datenkennung umfasst, wobei die wichtige Datenkennung einer Knotenvorrichtung in der Messdomäne angibt, in einem Prozess zum Übertragen des ersten iOAM-Pakets ein wichtiges Ereignis, das eine vorbestimmte Bedingung erfüllt, auszulösen, und
wenn bestimmt wird, dass das erste iOAM-Paket die wichtige Datenkennung umfasst, der Prozessor (130) ferner ausgelegt ist zum Erzeugen einer Benachrichtigungsnachricht basierend auf dem ersten iOAM-Paket; und
der Sender (110) ausgelegt ist zum Senden der Benachrichtigungsnachricht an eine Verwaltungsvorrichtung in dem iOAM-Netzwerk, wobei die Benachrichtigungsnachricht die Erstknoteninformationen umfasst;
wobei die Benachrichtigungsnachricht ferner Endknoteninformationen umfasst und die Endknoteninformationen Informationen über die Endknotenvorrichtung, die das erste iOAM-Paket überträgt, angeben; und
wobei
der Prozessor ferner zu Folgendem ausgelegt ist: vor dem Bestimmen, ob das erste iOAM-Paket die wichtige Datenkennung umfasst, Detektieren, ob die Endknotenvorrichtung in einem Prozess zum Übertragen des ersten iOAM-Pakets ein wichtiges Ereignis, das eine vorbestimmte Bedingung erfüllt, auslöst, umfassend Bestimmen, ob ein Datenstau auftritt und/oder ob sich ein Paketübertragungspfad ändert; und
wenn bestimmt wird, dass die Endknotenvorrichtung in dem Prozess zum Übertragen des ersten iOAM-Pakets das wichtige Ereignis, das die vorbestimmte Bedingung erfüllt, auslöst, der Prozessor ferner ausgelegt ist zum Aktualisieren einer wichtigen Datenkennung in dem ersten iOAM-Paket; und
wobei die wichtige Datenkennung einen Wert umfasst, der mit Zunahme einer Menge von Knotenvorrichtungen, die das wichtige Ereignis, das die vorbestimmte Bedingung erfüllt, auslösen, zunimmt.

12. "in-situ Operation, Administration and Maintenance"- bzw. iOAM-Paketübertragungseinrichtung, wobei die Einrichtung auf ein iOAM-Netzwerk angewendet wird, das iOAM-Netzwerk eine Messdomäne umfasst, die Messdomäne eine Erstknotenvorrichtung umfasst, die Einrichtung in der Erstknotenvorrichtung angeordnet ist und die Einrichtung Folgendes umfasst:
einen Sender (210), einen Empfänger (220) und einen Prozessor (230), wobei der Empfänger (220) ausgelegt ist zum Erhalten eines ersten iOAM-Pakets, wobei das erste iOAM-Paket in dem iOAM-Netzwerk übertragene Dienstdaten umfasst;
der Prozessor (230) ausgelegt ist zum Bestimmen, ob die Erstknotenvorrichtung in einem Prozess zum Übertragen des ersten iOAM-Pakets ein wichtiges Ereignis, das eine vorbestimmte Bedingung erfüllt, auslöst, umfassend eine Bestimmung, ob ein Datenstau auftritt und/oder ob sich ein Paketübertragungspfad ändert;
wenn der Prozessor (230) bestimmt, dass die Erstknotenvorrichtung in dem Prozess zum Übertragen des ersten iOAM-Pakets das wichtige Ereignis, das die vorbestimmte Bedingung erfüllt, auslöst, der Prozessor (230) das erste iOAM-Paket aktualisiert, wobei ein aktualisiertes erstes iOAM-Paket eine wichtige Datenkennung, Erstknoteninformationen und Dienstdaten umfasst und die Erstknoteninformationen Informationen über die Erstknotenvorrichtung, die das erste iOAM-Paket überträgt, angeben und wobei die wichtige Datenkennung einen Wert umfasst, der mit Zunahme einer Menge von Knotenvorrichtungen, die das wichtige Ereignis, das die vorbestimmte Bedingung erfüllt, auslösen, zunimmt; und
der Sender (210) ausgelegt ist zum Weiterleiten des aktualisierten ersten iOAM-Pakets an eine "Next-Hop"-Knotenvorrichtung der Erstknotenvorrichtung.

13. Einrichtung nach Anspruch 12, wobei
sich die wichtige Datenkennung in einem voreingestellten Feld in einem allgemeinen Paketheader des aktualisierten ersten iOAM-Pakets befindet;
sich die wichtige Datenkennung in einem voreingestellten Feld in einem iOAM-Paketheader des aktualisierten ersten iOAM-Pakets befindet;
sich die wichtige Datenkennung in den in dem aktualisierten ersten iOAM-Paket enthaltenen Dienstdaten befindet; oder
sich die wichtige Datenkennung in einem voreingestellten Feld zwischen einem iOAM-Paketheader und den Dienstdaten, die zu dem aktualisierten ersten iOAM-Paket gehören, befindet.

## Revendications

1. Procédé de transmission de paquets d'administration et de maintenance d'opérations in situ, iOAM, le procédé étant appliqué à un réseau iOAM, le réseau iOAM comprenant un domaine de mesure, le domaine de mesure comprenant un dispositif de noeud de queue, le dispositif de noeud de queue étant un dispositif de sortie dans le domaine de mesure, et le procédé comprenant :
la réception (S11), par le dispositif de noeud de queue, d'un premier paquet iOAM envoyé par un premier dispositif de noeud, le premier paquet iOAM comprenant des premières informations de noeud et des données de service, les premières informations de noeud indiquant des informations sur le premier dispositif de noeud qui transmet le premier paquet iOAM, et le domaine de mesure comprenant le premier dispositif de noeud ;
la détermination (S 12), par le dispositif de noeud de queue, si le premier paquet iOAM comprend un identifiant de données importantes, l'identifiant de données importantes indiquant un dispositif de noeud dans le domaine de mesure pour déclencher, au cours d'un processus de transmission du premier paquet iOAM, un événement important qui satisfait une condition prédéterminée ; et
lorsque le dispositif de noeud de queue détermine que le premier paquet iOAM comprend l'identifiant de données importantes, la génération (S13), par le dispositif de noeud de queue, d'un message de notification sur la base du premier paquet iOAM, et l'envoi, par le dispositif de noeud de queue, du message de notification à un dispositif d'administration dans le réseau iOAM, le message de notification comprenant les premières informations de noeud ;
le message de notification comprenant en outre des informations de noeud de queue, et les informations de noeud de queue indiquant des informations sur le dispositif de noeud de queue qui transmet le premier paquet iOAM ; et
avant la détermination (S12), par le dispositif de noeud de queue, si le premier paquet iOAM comprend un identifiant de données importantes, comprenant en outre :
la détection, par le dispositif de noeud de queue, si le dispositif de noeud de queue déclenche, au cours d'un processus de transmission du premier paquet iOAM, l'événement important qui satisfait une condition prédéterminée comprenant la détermination si un encombrement se produit, et/ou si un chemin de transmission de paquets change ; et
lorsque le dispositif de noeud de queue détermine que le dispositif de noeud de queue déclenche, au cours du processus de transmission du premier paquet iOAM, l'événement important qui satisfait la condition prédéterminée, la mise à jour, par le dispositif de noeud de queue, d'un identifiant de données importantes dans le premier paquet iOAM ; et
l'identifiant de données importantes comprenant une valeur qui augmente à mesure qu'augmente une quantité de dispositifs de noeuds qui déclenchent l'événement important qui satisfait la condition prédéterminée.

2. Procédé selon la revendication 1, comprenant en outre :
lorsque le dispositif de noeud de queue détermine que le premier paquet iOAM ne comprend pas l'identifiant de données importantes, le saut de la génération, par le dispositif de noeud de queue, du message de notification.

3. Procédé selon l'une quelconque des revendications 1 à 2, la réception (S11), par le dispositif de noeud de queue, d'un premier paquet iOAM envoyé par un premier dispositif de noeud comprenant :
la réception, par le dispositif de noeud de queue, du premier paquet iOAM envoyé par le premier dispositif de noeud et acheminé par un second dispositif de noeud, le premier paquet iOAM comprenant en outre des secondes informations de noeud ;
les secondes informations de noeud indiquant le second dispositif de noeud qui transmet le premier paquet iOAM ;
les secondes informations de noeud étant des informations de noeud encapsulées par le second dispositif de noeud dans le premier paquet iOAM ; et
le message de notification comprenant en outre les secondes informations de noeud.

4. Procédé selon l'une quelconque des revendications 1 et 2, la détection, par le dispositif de noeud de queue, si le dispositif de noeud de queue déclenche, au cours d'un processus de transmission du premier paquet iOAM, un événement important qui satisfait une condition prédéterminée comprenant :
l'obtention, par le dispositif de noeud de queue, d'un paramètre d'encombrement d'un port de sortie du dispositif de noeud de queue, le paramètre d'encombrement comprenant un seuil de notification d'encombrement explicite, ECN ;
lorsque le paramètre d'encombrement est supérieur à un seuil d'encombrement prédéfini, la détermination, par le dispositif de noeud de queue, que le dispositif de noeud de queue déclenche, au cours du processus de transmission du premier paquet iOAM, l'événement important qui satisfait la condition prédéterminée ; et
lorsque le dispositif de noeud de queue détermine que le dispositif de noeud de queue déclenche, au cours du processus de transmission du premier paquet iOAM, l'événement important qui satisfait la condition prédéterminée, l'ajout, par le dispositif de noeud de queue, des informations de noeud de queue au premier paquet iOAM, les informations de noeud de queue comprenant un identifiant de noeud du dispositif de noeud de queue, une heure à laquelle le premier paquet iOAM arrive à un port d'entrée du dispositif de noeud de queue et une heure à laquelle le premier paquet iOAM arrive au port de sortie du dispositif de noeud de queue.

5. Procédé selon l'une quelconque des revendications 1 et 2, la détection, par le dispositif de noeud de queue, si le dispositif de noeud de queue déclenche, au cours d'un processus de transmission du premier paquet iOAM, un événement important qui satisfait une condition prédéterminée comprenant :
l'obtention, par le dispositif de noeud de queue, d'une première heure à laquelle le premier paquet iOAM arrive à un port d'entrée du dispositif de noeud de queue, et d'une seconde heure à laquelle le premier paquet iOAM arrive à un port de sortie du dispositif de noeud de queue :
lorsqu'une différence de temps entre la seconde heure et la première heure est supérieure à un seuil de temps prédéfini, la détermination, par le dispositif de noeud de queue, que le dispositif de noeud de queue déclenche, au cours du processus de transmission du premier paquet iOAM, l'événement important qui satisfait la condition prédéterminée ; et
lorsque le dispositif de noeud de queue détermine que le dispositif de noeud de queue déclenche, au cours du processus de transmission du premier paquet iOAM, l'événement important qui satisfait la condition prédéterminée, l'ajout, par le dispositif de noeud de queue, des informations de noeud de queue au premier paquet iOAM, les informations de noeud de queue comprenant un identifiant de noeud du dispositif de noeud de queue, une heure à laquelle le premier paquet iOAM arrive au port d'entrée du dispositif de noeud de queue et une heure à laquelle le premier paquet iOAM arrive au port de sortie du dispositif de noeud de queue.

6. Procédé selon l'une quelconque des revendications 1 et 2, la détection, par le dispositif de noeud de queue, si le dispositif de noeud de queue déclenche, au cours d'un processus de transmission du premier paquet iOAM, un événement important qui satisfait une condition prédéterminée comprenant :
l'obtention, par le dispositif de noeud de queue, d'un paramètre caractéristique d'un flux de données correspondant au premier paquet iOAM ;
la comparaison, par le dispositif de noeud de queue, du paramètre caractéristique du flux de données correspondant au premier paquet iOAM avec un paramètre caractéristique d'un flux de données correspondant à un paquet iOAM cible stocké dans le dispositif de noeud de queue, le paquet iOAM cible étant un paquet iOAM précédemment obtenu par le dispositif de noeud de queue ;
lorsque le paramètre caractéristique du flux de données correspondant au premier paquet iOAM est le même que le paramètre caractéristique du flux de données correspondant au paquet iOAM cible, la comparaison, par le dispositif de noeud de queue, d'un port qui fait partie du dispositif de noeud de queue et qui correspond au premier paquet iOAM avec un port qui fait partie du dispositif de noeud de queue et qui correspond au paquet iOAM cible, le port comprenant un port d'entrée et/ou un port de sortie :
lorsque le port qui fait partie du dispositif de noeud de queue et qui correspond au premier paquet iOAM est différent du port qui fait partie du dispositif de noeud de queue et qui correspond au paquet iOAM cible, la détermination, par le dispositif de noeud de queue, que le dispositif de noeud de queue déclenche, au cours du processus de transmission du premier paquet iOAM, l'événement important qui satisfait la condition prédéterminée ; et
lorsque le dispositif de noeud de queue détermine que le dispositif de noeud de queue déclenche, au cours du processus de transmission du premier paquet iOAM, l'événement important qui satisfait la condition prédéterminée, l'ajout, par le dispositif de noeud de queue, des informations de noeud de queue au premier paquet iOAM, les informations de noeud de queue comprenant un identifiant de noeud du dispositif de noeud de queue et un identifiant de port du dispositif de noeud de queue, et l'identifiant de port comprenant un identifiant de port d'entrée et/ou un identifiant de port de sortie.

7. Procédé de transmission de paquets d'administration et de maintenance d'opérations in situ, iOAM, le procédé étant appliqué à un réseau iOAM, le réseau iOAM comprenant un domaine de mesure, le domaine de mesure comprenant un premier dispositif de noeud, et le procédé comprenant :
l'obtention (S31), par le premier dispositif de noeud, d'un premier paquet iOAM, le premier paquet iOAM comprenant des données de service transmises dans le réseau iOAM;
la détermination (S32), par le premier dispositif de noeud, si le premier dispositif de noeud déclenche, au cours d'un processus de transmission du premier paquet iOAM, un événement important qui satisfait une condition prédéterminée comprenant la détermination si l'encombrement se produit, et/ou si un chemin de transmission de paquets change ;
lorsque le premier dispositif de noeud détermine que le premier dispositif de noeud déclenche, au cours du processus de transmission du premier paquet iOAM, l'événement important qui satisfait la condition prédéterminée, la mise à jour (S33), par le premier dispositif de noeud, du premier paquet iOAM, un premier paquet iOAM mis à jour comprenant un identifiant de données importantes, des premières informations de noeud et des données de service, et les premières informations de noeud indiquant des informations sur le premier dispositif de noeud qui transmet le premier paquet iOAM, et l'identifiant de données importantes comprenant une valeur qui augmente à mesure qu'augmente la quantité de dispositifs de noeuds qui déclenchent l'événement important qui satisfait la condition prédéterminée ; et
l'acheminement (S34), par le premier dispositif de noeud, du premier paquet iOAM mis à jour à un dispositif de noeud suivant du premier dispositif de noeud.

8. Procédé selon la revendication 7,
l'identifiant de données importantes étant situé dans un champ prédéfini d'un en-tête de paquet général du premier paquet iOAM mis à jour ;
l'identifiant de données importantes étant situé dans un champ prédéfini d'un en-tête de paquet iOAM du premier paquet iOAM mis à jour ;
l'identifiant de données importantes étant situé dans les données de service comprises dans le premier paquet iOAM mis à jour ; ou
l'identifiant de données importantes étant situé dans un champ prédéfini entre un en-tête de paquet iOAM et les données de service qui font partie du premier paquet iOAM mis à jour.

9. Procédé selon la revendication 7 ou 8, la détermination (S32), par le premier dispositif de noeud, si le premier dispositif de noeud déclenche, au cours d'un processus de transmission du premier paquet iOAM, un événement important qui satisfait une condition prédéterminée comprenant :
l'obtention, par le premier dispositif de noeud, d'un paramètre d'encombrement d'un port de sortie du premier dispositif de noeud, le paramètre d'encombrement comprenant un seuil de notification d'encombrement explicite, ECN, et
lorsque le paramètre d'encombrement est supérieur à un seuil d'encombrement prédéfini, la détermination, par le premier dispositif de noeud, que le premier dispositif de noeud déclenche, au cours du processus de transmission du premier paquet iOAM, l'événement important qui satisfait la condition prédéterminée ; et
les premières informations de noeud comprenant un identifiant de noeud du premier dispositif de noeud, l'heure à laquelle le premier paquet iOAM arrive à un port d'entrée du premier dispositif de noeud et l'heure à laquelle le premier paquet iOAM arrive au port de sortie du premier dispositif de noeud.

10. Procédé selon la revendication 7 ou 8, la détermination (S32), par le premier dispositif de noeud, si le premier dispositif de noeud déclenche, au cours d'un processus de transmission du premier paquet iOAM, un événement important qui satisfait une condition prédéterminée comprenant :
l'obtention, par le premier dispositif de noeud, d'une première heure à laquelle le premier paquet iOAM arrive à un port d'entrée du premier dispositif de noeud, et d'une seconde heure à laquelle le premier paquet iOAM arrive à un port de sortie du premier dispositif de noeud ;
lorsqu'une différence de temps entre la seconde et la première heure est supérieure à un seuil de temps prédéfini, la détermination, par le premier dispositif de noeud, que le premier dispositif de noeud déclenche, au cours du processus de transmission du premier paquet iOAM, l'événement important qui satisfait la condition prédéterminée ; et
les premières informations de noeud comprenant un identifiant de noeud du premier dispositif de noeud, une heure à laquelle le premier paquet iOAM arrive au port d'entrée du premier dispositif de noeud et une heure à laquelle le premier paquet iOAM arrive au port de sortie du premier dispositif de noeud.

11. Appareil de transmission de paquets d'administration et de maintenance d'opérations in situ, iOAM, l'appareil étant appliqué à un réseau iOAM, le réseau iOAM comprenant un domaine de mesure, le domaine de mesure comprenant un dispositif de noeud de queue, le dispositif de noeud de queue étant un dispositif de sortie dans le domaine de mesure, l'appareil étant disposé dans le dispositif de noeud de queue, et l'appareil comprenant :
un émetteur (110), un récepteur (120), et un processeur (130),
le récepteur (120) étant configuré pour recevoir un premier paquet iOAM envoyé par un premier dispositif de noeud, le premier paquet iOAM comprenant des premières informations de noeud et des données de service, les premières informations de noeud indiquant des informations sur le premier dispositif de noeud qui transmet le premier paquet iOAM, et le domaine de mesure comprenant le premier dispositif de noeud ;
le processeur (130) étant configuré pour déterminer si le premier paquet iOAM comprend un identifiant de données importantes, l'identifiant de données importantes indiquant un dispositif de noeud dans le domaine de mesure pour déclencher, au cours d'un processus de transmission du premier paquet iOAM, un événement important qui satisfait une condition prédéterminée, et
lors de la détermination que le premier paquet iOAM comprend l'identifiant de données importantes, le processeur (130) étant en outre configuré pour générer un message de notification sur la base du premier paquet iOAM ; et
l'émetteur (110) étant configuré pour envoyer le message de notification à un dispositif d'administration dans le réseau iOAM, le message de notification comprenant les premières informations de noeud ;
le message de notification comprenant en outre des informations de noeud de queue, et les informations de noeud de queue indiquant des informations sur le dispositif de noeud de queue qui transmet le premier paquet iOAM ; et
le processeur étant en outre configuré pour : avant de déterminer si le premier paquet iOAM comprend l'identifiant de données importantes, détecter si le dispositif de noeud de queue déclenche, au cours d'un processus de transmission du premier paquet iOAM, un événement important qui satisfait une condition prédéterminée comprenant la détermination de l'existence d'un encombrement et/ou d'un changement de chemin de transmission de paquets ; et
lors de la détermination que le dispositif de noeud queue déclenche, au cours d'un processus de transmission du premier paquet iOAM, l'événement important qui satisfait la condition prédéterminée, le processeur étant en outre configuré pour mettre à jour un identifiant de données importantes dans le premier paquet iOAM ; et
l'identifiant de données importantes comprenant une valeur qui augmente à mesure qu'augmente une quantité de dispositifs de noeuds qui déclenchent l'événement important qui satisfait la condition prédéterminée.

12. Appareil de transmission de paquets d'administration et de maintenance d'opérations in situ, iOAM, l'appareil étant appliqué à un réseau iOAM, le réseau iOAM comprenant un domaine de mesure, le domaine de mesure comprenant un premier dispositif de noeud, l'appareil étant disposé dans le premier dispositif de noeud, et l'appareil comprenant :
un émetteur (210), un récepteur (220) et un processeur (230),
le récepteur (220) étant configuré pour obtenir un premier paquet iOAM, le premier paquet iOAM comprenant des données de service transmises dans le réseau iOAM ;
le processeur (230) étant configuré pour déterminer si le premier dispositif de noeud déclenche, au cours d'un processus de transmission du premier paquet iOAM, un événement important qui satisfait une condition prédéterminée comprenant une détermination si l'encombrement se produit, et/ou si un chemin de transmission de paquets change ;
lorsque le processeur (230) détermine que le premier dispositif de noeud déclenche, au cours du processus de transmission du premier paquet iOAM, l'événement important qui satisfait la condition prédéterminée, le processeur (230) mettant à jour le premier paquet iOAM, un premier paquet iOAM mis à jour comprenant un identifiant de données importantes, des premières informations de noeud, et des données de service, et les premières informations de noeud indiquant des informations sur le premier dispositif de noeud qui transmet le premier paquet iOAM, et l'identifiant de données importantes comprenant une valeur qui augmente à mesure qu'augmente une quantité de dispositifs de noeuds qui déclenchent l'événement important qui satisfait la condition prédéterminée ; et
l'émetteur (210) étant configuré pour acheminer le premier paquet iOAM mis à jour à un dispositif de noeud suivant du premier dispositif de noeud.

13. Appareil selon la revendication 12,
l'identifiant de données importantes étant situé dans un champ prédéfini d'un en-tête de paquet général du premier paquet iOAM mis à jour ;
l'identifiant de données importantes étant situé dans un champ prédéfini d'un en-tête de paquet iOAM du premier paquet iOAM mis à jour ;
l'identifiant de données importantes étant situé dans les données de service comprises dans le premier paquet iOAM mis à jour ; ou
l'identifiant de données importantes étant situé dans un champ prédéfini entre un en-tête de paquet iOAM et les données de service qui font partie du premier paquet iOAM mis à jour.
